# FASCICULE DE BREVET EUROPEEN

(11) **EP 4 256 128 B1**
(45) Date de publication et mention de la délivrance du brevet: **23.10.2024**
(21) Numéro de dépôt: 20829004.9
(22) Date de dépôt: 01.12.2020
(51) Int. Cl.: D21H 17/11, D21H 17/14, D21H 17/70, D21H 21/16, D21H 25/06

(54) **PROCÉDÉ ET DISPOSITIF D'ACYLATION D'UN MATÉRIAU HYDROXYLÉ ENTRAINÉ EN DÉFILEMENT**
VERFAHREN UND VORRICHTUNG ZUR ACYLIERUNG EINES KONTINUIERLICH LAUFENDEN HYDROXYLMATERIALS
METHOD AND DEVICE FOR ACYLATING A CONTINUOUSLY RUNNING HYDROXYL MATERIAL

(43) Date de publication de la demande: 11.10.2023
(73) Titulaire: Cellulotech Inc., Victoria BC V8V 5B1 (CA)
(72) Inventeur: SAMAIN, Daniel, 31500 TOULOUSE (FR)
(74) Mandataire: Herrero & Asociados, S.L.
(86) Numéro de dépôt international: PCT/FR2020/052238
(87) Numéro de publication internationale: WO 2022/117926

(56) Documents cités:
- WO-A1-2009/083525
- WO-A1-2017/002005
- FR-A1- 3 075 071
- US-A1- 2017 241 080

## Description

L'invention concerne un procédé et un dispositif d'acylation par synthèse chromatogénique d'un matériau, dit matériau hydroxylé, solide, porteur de groupements hydroxyles (-OH), dits hydroxyles réactogènes, accessibles et susceptibles de pouvoir réagir avec un chlorure d'acide gras à l'état gazeux, ledit matériau hydroxylé étant entrainé en défilement.

On connait de WO2012/066015 un procédé d'acylation d'un substrat hydroxylé entrainé en défilement, mis en oeuvre au moyen d'un dispositif d'acylation comprenant :
- un dévidoir amont adapté pour recevoir une bobine de substrat hydroxylé ;
- un dispositif d'application d'un réactif de greffage sur une face hydroxylée du substrat hydroxylé en défilement ;
- un rouleau chauffant rotatif dans un carénage formant avec le rouleau chauffant un entrefer de réception du substrat hydroxylé entrainé en défilement au contact du rouleau chauffant ;
- un système d'embarrage associé au rouleau chauffant permettant de plaquer la face opposée à la face hydroxylée du substrat hydroxylé au contact du rouleau chauffant ;
- un organe, disposé à l'aval du rouleau chauffant, d'introduction d'une lame d'air dans l'entrefer, s'écoulant à contrecourant du substrat hydroxylé et destiné à balayer le substrat, et entrainer le réactif de greffage en excès et l'acide chlorhydrique formé, et ;
- un dispositif d'extraction de l'acide chlorhydrique disposé en amont du rouleau chauffant ;
- un dispositif aval de rembobinage du substrat traité.

L'inventeur a constaté qu'un substrat acylé au moyen du dispositif de WO2012/066015 présente une hydrophobie plus faible que celle pouvant être obtenue par l'application d'une solution de chlorure d'acide gras dans le pentane sur ce même substrat hydroxylé, suivie de l'application d'un débit gazeux. Le procédé de WO2012/066015 n'est pas optimisé. Il ne permet pas de conférer au substrat acylé une hydrophobie et une imperméabilité à l'eau optimale et suffisamment durable dans le temps. À ce titre, la valeur d'angle de contact d'une goutte d'eau pure déposée sur un substrat acylé selon le procédé de WO2012/066015 est certes supérieure à 90°, mais reste inférieure à la valeur optimale de 150° obtenue par application d'une solution de chlorure d'acide gras dans le pentane.

L'inventeur pense que la lame d'air balayant le substrat hydroxylé dans l'entrefer du dispositif de WO2011/066015, si elle permet d'éliminer l'acide chlorhydrique formé du fait de la réaction, entraine aussi le réactif de greffage gazeux en ne permettant pas sa réaction optimale avec le substrat hydroxylé. Il en résulte des propriétés d'hydrophobie non satisfaisantes.

Des solutions pour améliorer l'efficacité et le rendement de la réaction d'acylation sont donc recherchées. En particulier de telles solutions sont recherchées pour pouvoir traiter un matériau hydroxylé à une échelle semi-industrielle ou industrielle, et le convertir en un matériau acylé dont les performances en termes d'hydrophobie sont satisfaisantes.

L'invention vise donc à proposer un procédé d'acylation par chromatogénie et un dispositif pour la mise en oeuvre d'un tel procédé permettant de transformer efficacement un matériau solide, porteur d'hydroxyles réactogènes, qui est hydrophile du fait desdits hydroxyles réactogènes, en un matériau hydrophobe et imperméable à l'eau.

En particulier, l'invention vise à proposer un tel procédé et un tel dispositif pour la production d'un matériau papier acylé qui soit perméable à l'air et imperméable à l'eau.

Plus particulièrement, l'invention vise à proposer un tel procédé et un tel dispositif pour la production d'un matériau papier acylé de décontamination par filtration.

L'invention vise donc à proposer un tel procédé et un tel dispositif d'acylation d'un matériau hydroxylé constitué, pour l'essentiel, de fibres de cellulose.

L'invention vise également à proposer un tel procédé et un tel dispositif d'acylation d'un matériau hydroxylé permettant une optimisation de la réaction d'acylation par synthèse chromatogénique.

L'invention vise en particulier à proposer un tel procédé et un tel dispositif d'acylation d'un matériau papier sous forme d'une laize entrainée en défilement.

L'invention concerne donc un procédé d'acylation d'un matériau, dit matériau hydroxylé, solide, porteur de groupements hydroxyles (-OH), dits hydroxyles réactogènes, accessibles et susceptibles de pouvoir réagir avec au moins un chlorure d'acide gras à l'état gazeux, dans lequel :
- ledit matériau hydroxylé est entrainé en défilement à travers une enceinte, dite enceinte d'acylation, délimitant un espace interne sous atmosphère gazeuse ;
- un chlorure d'acide gras à l'état liquide est appliqué en surface dudit matériau hydroxylé entrainé en défilement ;
- l'atmosphère gazeuse de ladite enceinte d'acylation est chauffée de façon que la température de l'atmosphère gazeuse au contact dudit matériau hydroxylé entrainé en défilement dans ladite enceinte d'acylation soit à une température, dite température (Tg) de greffage, inférieure à la température de vaporisation du chlorure d'acide gras -notamment comprise entre 150°C et 220°C, en particulier de l'ordre de 180°C- et suffisante pour permettre une acylation dudit matériau hydroxylé traversant ladite enceinte d'acylation ;
- un débit d'une composition gazeuse -notamment un débit d'air atmosphérique- s'écoulant d'aval en amont dans ladite enceinte d'acylation à contrecourant dudit matériau hydroxylé entrainé en défilement est maintenu ;
ce par quoi :
o un matériau, dit matériau acylé, entrainé en défilement est formé du fait d'une réaction d'acylation par greffage covalent se produisant dans ladite enceinte d'acylation entre au moins une partie desdits hydroxyles réactogènes et du chlorure d'acide gras à l'état gazeux, et ;
o de l'acide chlorhydrique gazeux produit du fait de la réaction d'acylation est entrainé d'aval en amont par le débit de composition gazeuse ;
caractérisé en ce que le débit de la composition gazeuse est ajusté de façon que du chlorure d'acide gras (à l'état gazeux ou sous forme liquide aérosol dispersée dans l'atmosphère gazeuse de ladite enceinte d'acylation) soit maintenu dans l'atmosphère gazeuse de ladite enceinte d'acylation à une concentration telle que le chlorure d'acide gras à l'état gazeux soit présent dans l'atmosphère gazeuse de ladite enceinte d'acylation avec une pression partielle sensiblement égale à la pression de vapeur saturante du chlorure d'acide gras à ladite température (Tg) de greffage.

Dans tout le texte :
- l'expression « matériau hydroxylé/acylé » désigne un matériau qui, introduit dans ledit réacteur d'acylation sous une forme hydroxylée (hydroxyles libres), est converti au cours de son défilement dans ladite enceinte d'acylation en un matériau au moins partiellement acylé, dans lequel au moins une partie des groupements hydroxyles dudit matériau hydroxylé sont convertis en groupements acyles dudit matériau acylé, et ;
- les termes « amont » et « aval » sont définis par rapport au sens de défilement dudit matériau hydroxylé à partir d'un dévidoir dudit matériau hydroxylé s'étendant en amont de ladite enceinte d'acylation, vers un organe de collecte d'un matériau acylé du fait de la réaction d'acylation, l'organe de collecte et s'étendant en aval de ladite enceinte d'acylation. S'agissant du sens de circulation du débit de composition gazeuse à contrecourant du sens de défilement du matériau hydroxylé/acylé dans ladite enceinte d'acylation, on conserve dans tout le texte, les définitions des termes « amont » et « aval », définies par rapport au sens de défilement dudit matériau hydroxylé/acylé. Le débit de composition gazeuse circule à contrecourant dudit matériau hydroxylé/acylé et globalement de l'aval de ladite enceinte d'acylation et du réacteur d'acylation vers l'amont de ladite enceinte d'acylation et du réacteur d'acylation.

L'invention concerne donc un procédé de traitement industriel et/ou préindustriel et à pression atmosphérique d'une bande ou laize - notamment conditionnée en rouleau ou en feuillets plissés- d'un matériau hydroxylé -c'est-à-dire porteur de groupements hydroxyles libres, réactogènes, accessibles et susceptibles de pouvoir réagir avec au moins un chlorure d'acide gras à l'état gazeux- en vue de son acylation, ledit matériau hydroxylé étant entrainé en défilement dans ladite enceinte d'acylation selon l'axe longitudinal de la bande dudit matériau hydroxylé/acylé.

Selon le principe général d'une réaction d'acylation par chromatogénie, un chlorure d'acide gras -notamment un chlorure d'acide gras à longue chaine- réagit à l'état gazeux avec un hydroxyle réactogène du matériau hydroxylé pour former un lien ester entre ledit matériau hydroxylé et la chaine grasse hydrocarbonée (R) du chlorure d'acide gras, selon l'équation (I) suivante :

Matériau-OH + R-CO-Cℓ ⇆ Matériau-O-CO-R + HCℓ (I).

On connait en particulier la réaction d'acylation par chromatogénie appliquée à un matériau cellulosique porteur de tels hydroxyles réactogènes, tel que du papier. L'engagement d'hydroxyles réactogènes et hydrophiles du matériau cellulosique dans des liens esters formés avec des chaines grasses hydrocarbonées (R) permet une augmentation de l'hydrophobie des fibres de cellulose du matériau cellulosique acylé, lui conférant des propriétés d'hydrophobie et d'imperméabilité à l'eau. La réaction d'acylation par chromatogénie se produit en l'absence de tout solvant -notamment de tout solvant organique-. Elle se déroule en l'absence de tout catalyseur et ne nécessite pas une élimination de ce dernier en fin de réaction. Elle se produit par chauffage du chlorure d'acide gras à une température inférieure à sa température de vaporisation et à la pression atmosphérique. Elle est en outre favorisée par le fait que l'acide chlorhydrique (HCf) gazeux produit du fait de la réaction est entrainé par un débit de composition gazeuse. Cet entrainement permet de limiter -voire d'empêcher totalement- l'hydrolyse de l'ester formé et de déplacer l'équilibre de la réaction dans le sens de la formation des produits de réaction et du matériau acylé (matériau-O-CO-R).

Dans un procédé selon l'invention, le débit de composition gazeuse est ajusté de façon à être suffisant pour entraîner l'acide chlorhydrique formé du fait de la réaction et déplacer l'équilibre de cette réaction, mais aussi de façon à être suffisamment faible pour maintenir dans l'atmosphère gazeuse de ladite enceinte d'acylation, du chlorure d'acide gras à une concentration telle que du chlorure d'acide gras à l'état gazeux soit présent dans l'atmosphère gazeuse de ladite enceinte d'acylation avec une pression partielle la plus proche possible de -notamment sensiblement égale à- la pression de vapeur saturante du chlorure d'acide gras à ladite température (Tg) de greffage.

Dans certains modes de réalisation d'un procédé selon l'invention, le chlorure d'acide gras -notamment le chlorure d'acide gras à l'état gazeux- et l'acide chlorhydrique sont quantifiés dans au moins l'un des fluides choisis parmi le débit de composition gazeuse sortant de ladite enceinte d'acylation et l'atmosphère gazeuse de ladite enceinte d'acylation, et ;
au moins l'un -notamment chacun- des paramètres choisi dans le groupe formé de :
   - la quantité de chlorure d'acide gras appliqué par unité de surface dudit matériau hydroxylé entraîné en défilement ;
   - la vitesse de défilement du matériau hydroxylé à travers ladite enceinte d'acylation ;
   - du temps de séjour dudit matériau hydroxylé dans ladite enceinte d'acylation ;
   - le débit de la composition gazeuse ;
   - la température de la composition gazeuse, et ;
   - ladite température (Tg) de greffage dans ladite enceinte d'acylation ;
est ajusté en fonction de cette quantification de façon à :
   ▪ maximiser la concentration d'acide chlorhydrique gazeux, et à ;
   ▪ minimiser la concentration du chlorure d'acide gras ;
dans le débit de composition gazeuse en amont de ladite enceinte d'acylation.

Dans ces modes de réalisation, on ajuste au moins l'un des paramètres ci-dessus mentionnés de façon à maximiser la concentration d'acide chlorhydrique dans le débit de composition gazeuse en sortie amont de ladite enceinte d'acylation, la production d'un débit de composition gazeuse riche en acide chlorhydrique constituant un indicateur du bon déroulement de la réaction d'acylation. On ajuste au moins l'un des paramètres ci-dessus mentionnés de façon à minimiser la concentration de chlorure d'acide gras dans le débit de composition gazeuse en sortie amont de ladite enceinte d'acylation.

En particulier, on ajuste au moins l'un de ces paramètres, notamment la quantité dudit chlorure d'acide gras appliqué en surface dudit matériau hydroxylé et/ou ladite température (Tg) de greffage et/ou le débit de la composition gazeuse et/ou la vitesse de défilement dudit matériau hydroxylé et/ou le temps de séjour dudit matériau hydroxylé dans ladite enceinte d'acylation, de façon que la concentration du chlorure d'acide gras dans l'atmosphère gazeuse de ladite enceinte d'acylation, aux abords et au contact dudit matériau hydroxylé, corresponde sensiblement à la pression de vapeur saturante du chlorure d'acide gras à ladite température (Tg) de greffage.

La présence de chlorure d'acide gras (à l'état gazeux et à l'état liquide aérosol dispersé dans l'atmosphère gazeuse) à une concentration excessive dans le débit de composition gazeuse en amont de ladite enceinte d'acylation est indicatrice de conditions de réaction inadaptées pour permettre la réaction d'une majeure partie du chlorure d'acide gras et dudit matériau hydroxylé. L'inadaptation de ces conditions peut découler, notamment :
- d'une quantité excessive de chlorure d'acide gras déposé sur ledit matériau hydroxylé, et/ou ;
- d'une vitesse inadaptée de défilement dudit matériau hydroxylé, et/ou ;
- d'un débit de composition gazeuse excessif ne permettant pas de maintenir dans ladite enceinte d'acylation, une concentration de chlorure d'acide gras suffisante, et/ou ;
- d'une valeur de température dans ladite enceinte d'acylation ne permettant pas la réaction d'acylation.

Dans un procédé selon l'invention, on quantifie le chlorure d'acide gras dans le débit de composition gazeuse par tout moyen adapté, disposé en amont de ladite enceinte d'acylation et/ou dans ladite enceinte d'acylation. Il peut être quantifié en continu par tout moyen de détection connu, notmment dans le domaine de la chromatographie analytique en phase gazeuse (CPG). Une telle quantification peut, par exemple, être réalisée au moyen d'un détecteur à ionisation de flamme (FID) ou par spectrométrie de masse. L'acide chlorhydrique peut être quantifié dans le débit de composition gazeuse par tout moyen adapté, par exemple, par bullage du débit de composition gazeuse dans une composition aqueuse et titrage pH métrique de cette composition aqueuse. Une telle quantification de l'acide chlorhydrique et du chlorure d'acide gras dans le débit de composition gazeuse dans ladite enceinte d'acylation et/ou en amont de ladite enceinte d'acylation permet un ajustement d'au moins un paramètre précité et une optimisation du déroulement de la réaction d'acylation.

Dans certains modes de réalisation, on soumet l'atmosphère gazeuse de ladite enceinte d'acylation à un brassage adapté pour :
- favoriser des échanges de chaleur entre ledit matériau hydroxylé/acylé et l'atmosphère gazeuse de ladite enceinte d'acylation ;
- permettre l'évaporation du chlorure d'acide gras liquide et la diffusion de chlorure d'acide gras gazeux naissant dans ladite enceinte d'acylation ;
- entrainer l'acide chlorhydrique formé du fait de la réaction d'acylation et limiter la dégradation dudit matériau hydroxylé/acylé du fait de cet acide chlorhydrique.

En combinaison ;
- une valeur de concentration en chlorure d'acide gras dans l'atmosphère gazeuse de ladite enceinte d'acylation telle que la pression partielle de chlorure d'acide gras à l'état gazeux est sensiblement égale à la pression de vapeur saturante du chlorure d'acide gras à ladite température (Tg) de greffage ;
- une valeur de concentration en chlorure d'acide gras faible dans le débit de composition gazeuse en amont de ladite enceinte d'acylation, et ;
- une valeur de concentration d'acide chlorhydrique dans le débit de composition gazeuse en amont de ladite enceinte d'acylation, de l'ordre de grandeur de la valeur théorique maximale de concentration susceptible d'être atteinte du fait de la quantité de chlorure d'acide gras appliqué sur ledit matériau hydroxylé ;
constituent un indice de conditions réactionnelles optimales.

Dans un procédé selon l'invention, au moins l'un des paramètres susmentionnés est (sont) ajusté(s) de façon que la concentration du chlorure d'acide gras dans l'atmosphère gazeuse de ladite enceinte d'acylation soit telle que la pression partielle de chlorure d'acide gras à l'état gazeux soit sensiblement égale à la pression de vapeur saturante à ladite température (Tg) de greffage.

Dans le procédé et le dispositif d'acylation selon l'invention, ladite enceinte d'acylation est une enceinte confinée. Elle délimite un espace sous atmosphère gazeuse dans laquelle le chlorure d'acide gras à l'état gazeux peut être présent -au moins dans un proche environnement dudit matériau hydroxylé- avec une pression partielle sensiblement égale à la pression de vapeur saturante du chlorure d'acide gras à ladite température (Tg) de greffage, ce par quoi la réaction d'acylation est favorisée.

De préférence, l'atmosphère gazeuse de ladite enceinte d'acylation est chauffée par des moyens de chauffage sans contact d'une surface de chauffage avec ledit matériau hydroxylé. Rien n'empêche cependant de prévoir que ces moyens de chauffage comprennent des moyens complémentaires de chauffage par contact d'une surface chauffante des moyens de chauffage avec ledit matériau hydroxylé.

Dans certains modes de réalisation avantageux, ledit matériau acylé entrainé en défilement est soumis à un recyclage de chlorure d'acide gras en excès, dans lequel :
- ledit matériau acylé entrainé en défilement traverse une enceinte, dite enceinte de recyclage, s'étendant en aval de ladite enceinte d'acylation et délimitant un espace interne sous atmosphère gazeuse ;
- l'atmosphère gazeuse de ladite enceinte de recyclage étant portée à une température, dite température (Te) d'extraction, supérieure à ladite température (Tg) de greffage et inférieure à la température de vaporisation du chlorure d'acide gras -notamment comprise entre 180°C et 240°C, en particulier de l'ordre de 200°C- ;
- le débit de composition gazeuse s'écoule dans ladite enceinte de recyclage à contrecourant du défilement dudit matériau acylé puis dans ladite enceinte d'acylation de sorte que du chlorure d'acide gras en excès entrainé par ledit matériau acylé dans ladite enceinte de recyclage et vaporisé du fait de ladite température (Te) d'extraction est recyclé à l'état gazeux dans ladite enceinte d'acylation et condense dans ladite enceinte d'acylation du fait de la diminution de la température.

Dans un procédé selon l'invention, ledit matériau acylé traverse ladite enceinte de recyclage portée à ladite température (Te) d'extraction supérieure à ladite température (Tg) de greffage. Au moins une partie du chlorure d'acide gras à l'état liquide déposé sur ledit matériau acylé passe à l'état gazeux du fait de l'entrée dudit matériau acylé dans ladite enceinte de recyclage à ladite température (Tg) de greffage, est entrainée par le débit de composition gazeuse et recyclé dans ladite enceinte d'acylation. L'entrainement du chlorure d'acide gras jusque dans ladite enceinte d'acylation combiné à la décroissance de la température dans ladite enceinte d'acylation favorise la condensation du chlorure d'acide gras dans ladite enceinte d'acylation. L'acylation est favorisée.

Dans certains modes de réalisation, on chauffe l'atmosphère gazeuse de ladite enceinte de recyclage avec des moyens de chauffage sans contact d'une surface de chauffage avec ledit matériau acylé. Cela étant, rien n'empêche de prévoir que les moyens de chauffage de l'atmosphère gazeuse de ladite enceinte de recyclage comprennent des moyens complémentaires de chauffage par contact avec ledit matériau acylé, contribuant au chauffage de l'atmosphère gazeuse de ladite enceinte de recyclage.

Dans certains modes de réalisation, ledit matériau hydroxylé entrainé en défilement est soumis à un préchauffage -notamment à un séchage- dans une enceinte, dite enceinte de préchauffage, disposée en amont de ladite enceinte d'acylation et délimitant un espace interne sous atmosphère gazeuse, adaptée pour pouvoir être traversée par ledit matériau hydroxylé en défilement ;
l'atmosphère gazeuse de ladite enceinte de préchauffage présentant un gradient, dit gradient de préchauffage, croissant de température s'étendant entre une entrée amont dudit matériau hydroxylé dans ladite enceinte de préchauffage et une sortie aval dudit matériau hydroxylé vers ladite enceinte d'acylation.

Ledit gradient de préchauffage peut s'étendre à partir de la température atmosphérique -notamment comprise entre 20°C et 50°C- en entrée amont et jusqu'à ladite température (Tg) de greffage -notamment comprise entre 150°C et 220°C en sortie aval de ladite enceinte de préchauffage. Ledit gradient de préchauffage peut être formé en combinaison :
- par chauffage d'une partie centrale de ladite enceinte de préchauffage à une température, dite température (Ts) de préchauffage, comprise entre la température atmosphérique et ladite température (Tg) de greffage, et ;
- par le débit de composition gazeuse circulant dans ladite enceinte de préchauffage et entrant dans ladite enceinte de préchauffage à ladite température (Tg) de greffage.

Dans ces modes de réalisation, le débit de composition gazeuse s'écoule ;
- dans ladite enceinte de préchauffage à contrecourant dudit matériau hydroxylé, puis ;
- dans un organe d'extraction de l'acide chlorhydrique formé du fait de la réaction d'acylation dans ladite enceinte d'acylation.

Ledit gradient de préchauffage permet d'une part de sécher ledit matériau hydroxylé circulant dans ladite enceinte de préchauffage, la vapeur d'eau dégagée par ledit matériau hydroxylé étant entrainée par le débit de composition gazeuse. Il permet d'autre part, une condensation du chlorure d'acide gras à l'état gazeux entrainé par le débit de composition gazeuse dans ladite enceinte de préchauffage du fait du déclin de température de l'aval vers l'amont de ladite enceinte de préchauffage.

Dans certains modes de réalisation, l'atmosphère gazeuse de ladite enceinte de préchauffage est chauffée avec des moyens de chauffage sans contact d'une surface de chauffage avec ledit matériau hydroxylé. Dans d'autres modes de réalisation, rien n'empêche cependant de prévoir que les moyens de chauffage comprennent des moyens complémentaires de chauffage -notamment un rouleau chauffant- présentant une surface de chauffage par contact avec ledit matériau hydroxylé. De tels moyens de chauffage sont choisis pour porter ledit matériau hydroxylé à une température la plus proche possible de ladite température (Tg) de greffage en sortie aval de ladite enceinte de préchauffage.

Dans certains modes de réalisation, on soumet l'atmosphère gazeuse de ladite enceinte de préchauffage à un brassage adapté pour favoriser des échanges de chaleur entre l'atmosphère gazeuse de ladite enceinte de préchauffage et ledit matériau hydroxylé et une condensation de chlorure d'acide gras sur ledit matériau hydroxylé. Ladite enceinte de préchauffage peut être compartimentée, chaque compartiment étant muni d'un organe de brassage de l'atmosphère gazeuse de ce compartiment.

Dans certains modes de réalisation avantageux d'un procédé selon l'invention, ledit matériau hydroxylé/acylé est entrainé en défilement à travers une enceinte compartimentée, entre une entrée amont et une sortie aval de ladite enceinte compartimentée, dans laquelle ;
- un premier compartiment de ladite enceinte compartimentée est formé par ladite enceinte de préchauffage s'étendant en partie amont de ladite enceinte compartimentée ;
- un deuxième compartiment de ladite enceinte compartimentée est formé par ladite enceinte de recyclage s'étendant en partie aval de ladite enceinte compartimentée, et ;
- un troisième compartiment de ladite enceinte compartimentée est formé par ladite enceinte d'acylation, interposée entre ladite enceinte de préchauffage et ladite enceinte de recyclage ;
de façon que ledit matériau hydroxylé/acylé traverse d'amont en aval ladite enceinte de préchauffage, ladite enceinte d'acylation et ladite enceinte de recyclage.

Dans certains modes de réalisation d'un procédé selon l'invention, au moins l'un de l'acide chlorhydrique et du chlorure d'acide gras est analysé et dosé dans le débit de composition gazeuse et au moins un paramètre du procédé est ajusté en fonction d'un résultat de ce dosage, le paramètre ajusté étant choisi parmi les paramètres suivants :
- la quantité de chlorure d'acide gras appliqué par unité de surface dudit matériau hydroxylé ;
- la vitesse de défilement du matériau hydroxylé dans ladite enceinte d'acylation ;
- le débit de composition gazeuse ;
- la température de la composition gazeuse du débit de composition gazeuse ;
- ladite température (Tg) de greffage ;
- ledit gradient de préchauffage ;
- ladite température (Tr) de recyclage ;
- la longueur de parcours dudit matériau hydroxylé dans ladite enceinte de préchauffage ;
- la longueur de parcours dudit matériau hydroxylé/acylé dans ladite enceinte d'acylation, et ;
- la longueur de parcours dudit matériau acylé dans ladite enceinte de recyclage.

Dans ces modes de réalisation, on ajuste au moins l'un des paramètres ci-dessus mentionnés de façon à maximiser la concentration d'acide chlorhydrique dans le débit de composition gazeuse en sortie amont de ladite enceinte compartimentée. Un tel débit de composition gazeuse riche en acide chlorhydrique constitue un indicateur du bon déroulement de la réaction d'acylation. On ajuste au moins l'un des paramètres ci-dessus mentionnés de façon à minimiser la concentration de chlorure d'acide gras dans le débit de composition gazeuse en sortie amont de ladite enceinte compartimentée. On ajuste au moins l'un des paramètres ci-dessus mentionnés de façon à optimiser la concentration de chlorure d'acide gras dans le débit de composition gazeuse dans ladite enceinte d'acylation.

L'invention concerne aussi un dispositif, dit réacteur d'acylation, d'acylation d'un matériau, dit matériau hydroxylé, solide, porteur d'hydroxyles (-OH), dits hydroxyles réactogènes, accessibles et susceptibles de pouvoir réagir avec un chlorure d'acide gras à l'état gazeux, ledit réacteur d'acylation comprenant :
- des moyens d'entrainement en défilement dudit matériau hydroxylé entre un dévidoir dudit matériau hydroxylé s'étendant en partie amont dudit réacteur d'acylation et un organe de collecte d'un matériau acylé s'étendant en partie aval dudit réacteur d'acylation ;
- une enceinte, dite enceinte d'acylation ;
   o adaptée pour pouvoir être traversée par ledit matériau hydroxylé entrainé en défilement entre une entrée amont et une sortie aval de ladite enceinte d'acylation ;
   o délimitant un espace sous atmosphère gazeuse, et ;
   o munie de moyens de chauffage et de maintien de cette atmosphère gazeuse à une température, dite température (Tg) de greffage, inférieure à la température de vaporisation du chlorure d'acide gras -notamment comprise entre 150°C et 220°C, en particulier de l'ordre de 180°C- et apte à permettre une acylation dudit matériau hydroxylé traversant ladite enceinte d'acylation ;
- un dispositif applicateur -notamment en continu- d'un chlorure d'acide gras à l'état liquide en surface dudit matériau hydroxylé entrainé en défilement, le dispositif applicateur s'étendant en amont de ladite enceinte d'acylation, et ;
- des moyens d'établissement d'un débit de composition gazeuse adaptés pour que le débit de composition gazeuse traverse ladite enceinte d'acylation de l'aval vers l'amont de ladite enceinte d'acylation et à contrecourant par rapport au défilement dudit matériau hydroxylé ;
caractérisé en ce qu'il comprend des moyens d'ajustement du débit de composition gazeuse adaptés pour maintenir dans l'atmosphère gazeuse de ladite enceinte d'acylation une concentration de chlorure d'acide gras (à l'état gazeux ou sous forme liquide aérosol dispersée dans l'atmosphère gazeuse) telle que du chlorure d'acide gras à l'état gazeux soit présent dans l'atmosphère gazeuse de ladite enceinte d'acylation avec une pression partielle sensiblement égale à la pression de vapeur saturante du chlorure d'acide gras à ladite température (Tg) de greffage.

L'invention concerne également un dispositif, dit réacteur d'acylation, d'acylation d'un matériau, dit matériau hydroxylé, solide, porteur d'hydroxyles (-OH), dits hydroxyles réactogènes, accessibles et susceptibles de pouvoir réagir avec un chlorure d'acide gras à l'état gazeux, pour la mise en oeuvre d'un procédé selon l'invention.

Les avantages décrits ci-dessus en relation avec le procédé d'acylation dudit matériau hydroxylé s'appliquent également audit réacteur d'acylation.

Dans certains modes de réalisation, ledit réacteur d'acylation selon l'invention comprend une enceinte, dite enceinte de recyclage, -distincte de ladite enceinte d'acylation- disposée en aval de ladite enceinte d'acylation, délimitant un espace sous atmosphère gazeuse et adaptée pour pouvoir être traversée par ledit matériau acylé en défilement entre une entrée amont et une sortie aval de ladite enceinte de recyclage (par rapport au sens de défilement dudit matériau hydroxylé/acylé),
ladite enceinte d'acylation et ladite enceinte de recyclage étant en communication de composition gazeuse de façon que le débit de composition gazeuse traversant ladite enceinte d'acylation de l'aval vers l'amont dudit réacteur d'acylation traverse d'abord ladite enceinte de recyclage puis ladite enceinte d'acylation et à contrecourant par rapport au défilement dudit matériau acylé ;
ladite enceinte de recyclage comprenant des moyens de chauffage de l'atmosphère gazeuse de ladite enceinte de recyclage à une température, dite température (Te) d'extraction, supérieure à ladite température (Tg) de greffage et inférieure à la température de vaporisation du chlorure d'acide gras à pression atmosphérique -notamment à une température comprise entre 180°C et 240°C, en particulier de l'ordre de 200°C-.

Dans certains modes de réalisation avantageux, ledit réacteur d'acylation selon l'invention comprend une enceinte, dite enceinte de préchauffage, -distincte de ladite enceinte d'acylation et de ladite enceinte de recyclage- disposée en amont de l'entrée de ladite enceinte d'acylation, adaptée pour pouvoir être traversée par ledit matériau hydroxylé en défilement entre une entrée amont et une sortie aval de ladite enceinte de préchauffage et délimitant un espace interne sous atmosphère gazeuse ;
ladite enceinte de préchauffage étant équipée de moyens de chauffage de l'atmosphère gazeuse de ladite enceinte de préchauffage selon un gradient, dit gradient de préchauffage, croissant de température s'étendant entre une entrée amont dudit matériau hydroxylé dans ladite enceinte de préchauffage et une sortie aval dudit matériau hydroxylé hors de ladite enceinte de préchauffage.

Dans certains modes de réalisation, ledit réacteur d'acylation est formé d'une enceinte compartimentée traversée longitudinalement par ledit matériau hydroxylé/acylé entrainé en défilement entre une entrée et une sortie de ladite enceinte compartimentée, un premier compartiment de ladite enceinte compartimentée étant formé par ladite enceinte de préchauffage s'étendant en partie amont de l'enceinte compartimentée, un deuxième compartiment de ladite enceinte compartimentée étant formé par ladite enceinte de recyclage s'étendant en partie aval de ladite enceinte compartimentée et un troisième compartiment de ladite enceinte compartimentée étant formé par ladite enceinte d'acylation s'étendant en partie intermédiaire de l'enceinte compartimentée, interposée entre ladite enceinte de préchauffage et ladite enceinte de recyclage.

Ledit réacteur d'acylation est avantageusement compact. Il est simple dans sa conception, chacune des trois enceintes d'acylation, de préchauffage et de recyclage étant traversées par le matériau hydroxylé/acylé entrainé en défilement ainsi placé successivement au contact de l'atmosphère gazeuse de ladite enceinte de préchauffage selon ledit gradient de préchauffage, puis au contact de l'atmosphère gazeuse de ladite enceinte d'acylation à ladite température (Tg) de greffage, puis au contact de l'atmosphère gazeuse de ladite enceinte de recyclage à ladite température (Tr) de recyclage. D'autre part, le débit de composition gazeuse traverse successivement ladite enceinte de recyclage (dans laquelle elle se charge de chlorure d'acide gras, essentiellement à l'état gazeux), puis ladite enceinte d'acylation (dans laquelle elle se décharge de chlorure d'acide gras du fait du déclin de température et du fait de la réaction d'acylation et se charge d'acide chlorhydrique du fait de la réaction d'acylation) puis ladite enceinte de préchauffage. Il suffit donc de prévoir des ouvertures traversantes -pour ledit matériau hydroxylé/acylé et pour le débit de composition gazeuse- ménagées dans les parois séparant ladite enceinte d'acylation et ladite enceinte de recyclage, d'une part et séparant ladite enceinte d'acylation et ladite enceinte de préchauffage, d'autre part.

Les moyens de chauffage de ladite enceinte compartimentée -notamment les moyens de chauffage de ladite enceinte d'acylation, de ladite enceinte de préchauffage et de ladite enceinte de recyclage-peuvent être de tout type. Dans certains modes de réalisation, ces moyens de chauffage sont des moyens de chauffage à distance dudit matériau hydroxylé/acylé entrainé en défilement et sans contact avec ledit matériau hydroxylé/acylé, adaptés pour chauffer et maintenir :
- l'atmosphère gazeuse de ladite enceinte d'acylation à ladite température (Tg) de greffage ;
- l'atmosphère gazeuse de ladite enceinte de recyclage à ladite température (Te) d'extraction, et ;
- l'atmosphère gazeuse de ladite enceinte de préchauffage selon ledit gradient de préchauffage.

Dans certains modes de réalisation, les moyens de chauffage peuvent comprendre au moins un échangeur de chaleur dont au moins une surface de chauffage est en contact avec ladite atmosphère gazeuse. En particulier, dans certains modes de réalisation, ledit échangeur de chaleur forme une paroi extérieure de ladite enceinte d'acylation, de ladite enceinte de préchauffage et/ou de ladite enceinte de recyclage. Rien n'empêche que ces moyens de chauffage comprennent des moyens de chauffage complémentaire par contact d'une surface chauffante des moyens de chauffage avec ledit matériau hydroxylé.

Ledit réacteur d'acylation selon l'invention est muni d'un dispositif d'analyse adapté pour analyser et quantifier les espèces chimiques -notamment le chlorure d'acide gras et de l'acide chlorhydrique- présentes dans le débit de composition gazeuse -notamment dans le débit de composition gazeuse s'écoulant dans ladite enceinte d'acylation, dans ladite enceinte de recyclage ou dans ladite enceinte de préchauffage- et/ou en sortie amont de ladite enceinte d'acylation ou de ladite enceinte de préchauffage ou de ladite enceinte compartimentée. Le dispositif d'analyse est apte à produire des données de quantification représentatives de la concentration du chlorure d'acide gras et de la concentration de l'acide chlorhydrique dans le débit de composition gazeuse. Le dispositif d'analyse est apte à produire des données de quantification représentatives de la concentration du chlorure d'acide gras et de la concentration de l'acide chlorhydrique dans l'atmosphère gazeuse de ladite enceinte d'acylation. Un tel dispositif d'analyse permet un suivi (ou « monitoring chimique ») -notamment un suivi en continu et en temps réel- de la concentration de chlorure d'acide gras et de la concentration d'acide chlorhydrique dans toute partie dudit réacteur d'acylation.

Un tel dispositif d'analyse permet aussi un ajustement -notamment en temps réel- de paramètres ajustables de la réaction d'acylation tels que, par exemple, ladite température (Tg) de greffage, ledit gradient de température (Ts) de préchauffage, ladite température (Tr) de recyclage, la vitesse de défilement du matériau hydroxylé, le temps de séjour dudit matériau hydroxylé dans ladite enceinte d'acylation, la densité surfacique dudit chlorure d'acide gras appliqué sur ledit matériau hydroxylé, le débit de la composition gazeuse, notamment.

Dans certains modes de réalisation, ledit réacteur d'acylation comprend des moyens informatiques configurés pour recevoir les données de quantification et pour contrôler à partir de ces données de quantification, au moins l'un -notamment chacun- des organes dudit réacteur d'acylation, choisis dans le groupe formé :
- des moyens d'entrainement en défilement dudit matériau hydroxylé ;
- du dispositif d'application du chlorure d'acide gras en surface dudit matériau hydroxylé ;
- des moyens de chauffage de l'atmosphère gazeuse de ladite enceinte d'acylation à ladite température (Tg) de greffage ;
- des moyens de chauffage de l'atmosphère gazeuse de ladite enceinte de recyclage à ladite température (Tr) de recyclage ;
- des moyens de chauffage de l'atmosphère gazeuse de ladite enceinte de préchauffage selon ledit gradient de préchauffage ;
- des moyens d'établissement du débit de composition gazeuse, et ;
- de moyens de contrôle de la température de la composition gazeuse.

Dans certains modes de réalisation, ladite enceinte d'acylation est équipée de moyens pour former dans ladite enceinte d'acylation un débit, dit débit transversal, de composition gazeuse selon une direction d'écoulement sensiblement parallèle au plan du matériau hydroxylé/acylé et sensiblement orthogonale à la direction de défilement du matériau hydroxylé/acylé. De tels moyens sont adaptés pour acyler un matériau hydroxylé formé de carton ondulé. Dans ce mode de réalisation, la direction d'écoulement dudit débit transversal est sensiblement parallèle aux ondulations du carton ondulé de sorte que ledit débit transversal circule et traverse longitudinalement dans des lumières formées par les ondulations du carton ondulé.

Dans certains modes de réalisation, ledit réacteur d'acylation est muni d'un organe de rétention de l'acide chlorhydrique entrainé par le débit de composition gazeuse et de libération d'un débit de composition gazeuse sensiblement exempte d'acide chlorhydrique. Tout organe de rétention/piégeage de l'acide chlorhydrique est possible. Il peut s'agir d'un piège contenant une solution aqueuse d'au moins un composé basique dans laquelle le débit de composition gazeuse est entrainé à barboter. Avantageusement, le débit de composition gazeuse rejetée à l'extérieur dudit réacteur d'acylation est sensiblement exempt d'acide chlorhydrique.

Dans certains modes de réalisation d'un réacteur d'acylation selon l'invention, au moins l'une de ladite enceinte de préchauffage, de ladite enceinte d'acylation et de ladite enceinte de recyclage est équipée d'une pluralité de rouleaux de guidage du matériau hydroxylé/acylé entrainé en défilement, positionnés de façon à guider le matériau hydroxylé/acylé entrainé en défilement selon un parcours non linéaire.

Dans certains modes de réalisation avantageux d'un réacteur d'acylation selon l'invention, le dispositif applicateur du chlorure d'acide gras à l'état liquide en surface dudit matériau hydroxylé comprend un dispositif répartiteur du chlorure d'acide gras en surface dudit matériau hydroxylé, le dispositif répartiteur étant un dispositif répartiteur rotatif présentant une surface d'application formée d'un velours pourvu d'éléments filiformes de velours, non réactifs vis-à-vis du chlorure d'acide gras et aptes à pouvoir :
∘ se charger du chlorure d'acide gras par contact avec ledit au moins un chlorure d'acide gras, et ;
∘ libérer du chlorure d'acide gras au contact dudit matériau hydroxylé, par contact des éléments filiformes du velours avec ledit matériau hydroxylé. Dans certains modes de réalisation, le dispositif répartiteur est du type « rouleau laqueur ».

Le dispositif répartiteur permet de répartir de manière régulière, reproductible et homogène une quantité faible de chlorure d'acide gras en surface dudit matériau hydroxylé, cette quantité faible étant cependant suffisante pour permettre de conférer au matériau acylé une hydrophobie, une étanchéité aux liquides aqueux et une déperlance au moins égales, voire généralement supérieure à l'hydrophobie, l'étanchéité et la déperlance d'un matériau acylé obtenu par un procédé antérieur à l'invention.

L'invention concerne également un procédé et un dispositif d'acylation d'un matériau solide, porteur de groupes hydroxyles (-OH), dits hydroxyles réactogènes, accessibles et susceptibles de pouvoir réagir avec un chlorure d'acide gras à l'état gazeux, caractérisés en combinaison par tout ou partie des caractéristiques mentionnées ci-dessus ou ci-après. Quelle que soit la présentation formelle qui en est donnée, sauf indication contraire explicite, les différentes caractéristiques mentionnées ci-dessus ou ci-après ne doivent pas être considérées comme étroitement ou inextricablement liées entre elles, l'invention pouvant concerner l'une seulement de ces caractéristiques structurelles ou fonctionnelles, ou une partie seulement de ces caractéristiques structurelles ou fonctionnelles, ou une partie seulement de l'une de ces caractéristiques structurelles ou fonctionnelles, ou encore tout groupement, combinaison ou juxtaposition de tout ou partie de ces caractéristiques structurelles ou fonctionnelles.

D'autres buts, caractéristiques et avantages de l'invention apparaîtront à la lecture des exemples illustratifs et non limitatifs de certains modes de réalisation de l'invention et de la description suivante qui se réfère aux figures annexées et, dans lesquelles :
- la figure 1 est une représentation schématique en coupe d'un premier mode de réalisation particulier d'un réacteur d'acylation selon l'invention ;
- la figure 2 est une représentation schématique en coupe d'un deuxième mode de réalisation particulier d'un réacteur d'acylation selon l'invention ;
- la figure 3 est une représentation en schématique en perspective d'un mode de réalisation particulier d'une enceinte d'acylation de réacteur d'acylation selon l'invention, et ;

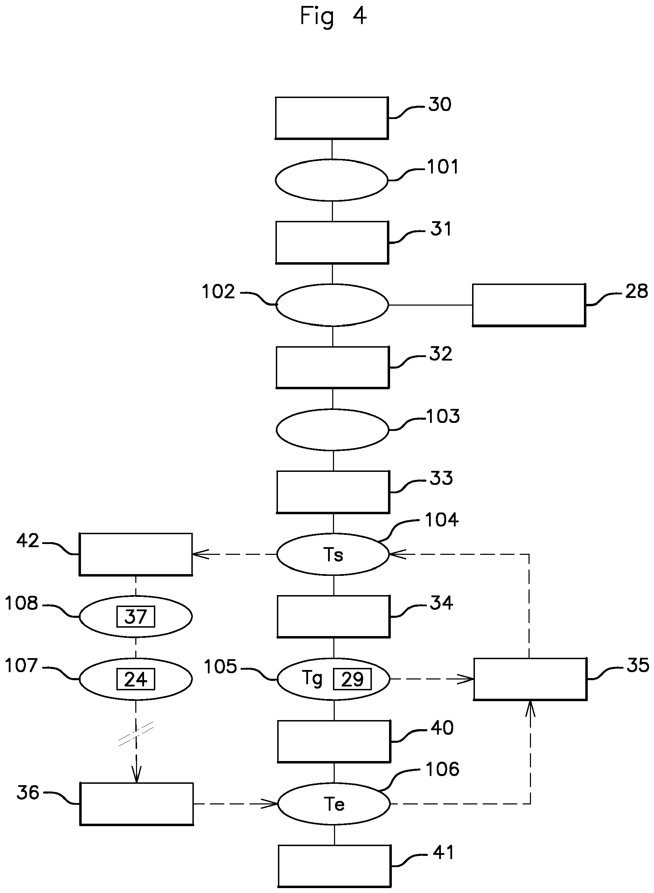

- la figure 4 est un schéma synoptique illustrant un mode de réalisation particulier d'un procédé d'acylation selon l'invention.

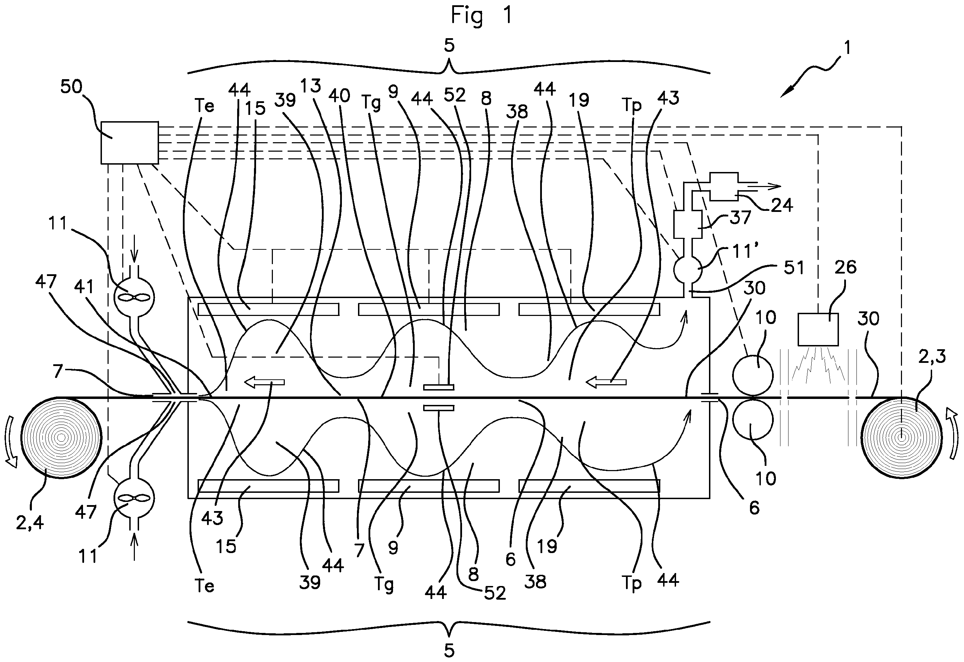

Dans les figures 1, 2 et 3, les dimensions et les proportions des éléments du réacteur d'acylation ne sont pas respectées. En particulier, la longueur du réacteur d'acylation s'étendant selon la direction de défilement du matériau hydroxylé est réduite par rapport à la section transversale du réacteur d'acylation aux fins de clarté.

L'inventeur a déterminé que :
- une vaporisation du chlorure d'acide gras en nécessaire pour la réaction d'acylation ;
- le placement d'un matériau hydroxylé dans une enceinte close saturée en chlorure d'acide gras à l'état gazeux à la température de greffage (c'est-à-dire en l'absence d'un débit de composition gazeuse) ne conduit qu'à une acylation lente du matériau hydroxylé, incompatible avec un traitement d'un matériau hydroxylé entrainé en défilement ;
- l'application d'un débit d'air intense sur un matériau hydroxylé supportant du chlorure d'acide gras à l'état liquide, apte à entrainer du chlorure d'acide gras à l'état gazeux, ne permet qu'une acylation faible du matériau hydroxylé et à une perte importante de chlorure d'acide gras à l'état gazeux.

L'inventeur a découvert que pour favoriser la réaction d'acylation, il convient 1) d'appliquer du chlorure d'acide gras à l'état liquide en surface du matériau hydroxylé, 2) d'ajuster la température de réaction à ladite température (Tg) de greffage et 3) d'appliquer un débit d'air juste suffisant pour entrainer l'acide chlorhydrique formé du fait de la réaction, mais aussi suffisamment faible pour maintenir du chlorure d'acide gras en conditions saturantes dans l'atmosphère gazeuse de ladite enceinte d'acylation. Selon l'inventeur, la réaction d'acylation par chromatogénie procède à partir d'un état physique particulier du chlorure d'acide gras, qu'il nomme « état de transition », accompagnant la vaporisation et/ou la condensation du chlorure d'acide gras, et que les changements d'état (vaporisation/condensation) du chlorure d'acide gras sont propices à sa réactivité. En effet, si la concentration en chlorure d'acide gras est inférieure à la concentration correspondant à la tension de vapeur saturante du chlorure d'acide gras à ladite température (Tg) de greffage, le chlorure d'acide gras liquide s'évapore, passe dans l'atmosphère gazeuse et le débit de composition gazeuse et ne recondense sur ledit matériau hydroxylé/acylé. Si la concentration en chlorure d'acide gras est au moins égale à la concentration correspondant à la tension de vapeur saturante, le chlorure d'acide gras gazeux recondense avant d'être entrainé dans le débit de composition gazeuse. L'inventeur considère que si le débit d'air (lame d'air ou « *air knife* ») formé dans le dispositif de WO2012/066015 permet d'entrainer l'acide chlorhydrique, par contre il ne permet pas de maintenir au contact dudit matériau hydroxylé, une atmosphère gazeuse avec une concentration suffisante de chlorure d'acide gras, notamment de chlorure d'acide gras dans cet « état de transition ».

La lame d'air d'entrainement de l'acide chlorhydrique de WO2012/066015 ne favorise pas des conditions optimales d'acylation. Le procédé et le dispositif de WO2012/066015 ne permettent pas de produire un matériau acylé présentant une hydrophobie comparable à celle d'un matériau acylé obtenu par un procédé non industriel par imprégnation d'un matériau hydroxylé avec une solution de chlorure d'acide gras dans un solvant organique, notamment dans le pentane. En comparant l'hydrophobie d'un matériau acylé obtenu selon WO2012/066015 et l'hydrophobie d'un matériau acylé obtenu par le procédé non industriel -par la mesure de l'indice de Cobb, par la mesure de l'angle de contact formé par une goutte d'eau déposée en surface du substrat acylé et par le test d'étanchéité d'une poche d'eau formée d'un tel substrat acylé-il a observé que l'hydrophobie du matériau acylé obtenu par le procédé de WO2012/066015 est inférieure à l'hydrophobie du matériau acylé obtenu par le procédé non industriel et que le procédé et le dispositif de WO2012/066015 ne favorisent pas la réaction d'acylation. En outre, le procédé de WO2012/066015 permet d'obtenir un matériau qui n'est qu'imparfaitement acylé, qu'au prix du dépôt d'un excès de chlorure d'acide gras, excès de chlorure d'acide gras qu'il est nécessaire d'éliminer du matériau en fin de procédé.

Ainsi, il a déterminé que les conditions d'acylation doivent être ajustées en regard du chlorure d'acide gras appliqué sur ledit matériau hydroxylé. À titre d'exemples, la pression de vapeur saturante du chlorure de l'acide palmitique (CH₃-(CH₂)₁₄-CO-Cℓ) est de l'ordre de 107 g/m³ à la température de 160°C et de l'ordre de 205 g/m³ à la température de 180°C. La pression de vapeur saturante du chlorure de l'acide stéarique (CH₃-(CH₂)₁₆-CO-Cℓ) est de l'ordre de 59 g/m³ à la température de 160°C et de l'ordre de 117 g/m³ à la température de 180°C. Il convient donc d'ajuster la température dans ladite enceinte d'acylation de façon à maximiser la concentration du chlorure d'acide gras et la pression partielle du chlorure d'acide gras à l'état gazeux dans l'atmosphère gazeuse de ladite enceinte d'acylation. Il convient également d'ajuster le débit de composition gazeuse en regard de cette température.

Dans un procédé selon l'invention, on mesure notamment la concentration d'acide chlorhydrique dans le débit de composition gazeuse en sortie de ladite enceinte d'acylation, la concentration de chlorure d'acide gras dans le débit de composition gazeuse en sortie de ladite enceinte d'acylation et la concentration de chlorure d'acide gras dans l'atmosphère gazeuse de ladite enceinte d'acylation et on ajuste la température (Tg) de greffage dans ladite enceinte d'acylation e/ou la quantité de chlorure d'acide gras appliqué par unité de surface dudit matériau hydroxylé et/ou la vitesse de défilement du matériau hydroxylé et/ou le temps de séjour dudit matériau hydroxylé dans ladite enceinte d'acylation, dans ladite enceinte de préchauffage et/o dans ladite enceinte de recyclage et/ou le débit de composition gazeuse, selon le résultat de ces mesures.

Une concentration faible d'acide chlorhydrique dans le débit de composition gazeuse en amont de ladite enceinte d'acylation indique une efficacité d'acylation faible. Elle peut révéler soit un défaut d'application du chlorure d'acide gras sur ledit matériau hydroxylé, soit une valeur de température trop faible dans ladite enceinte d'acylation. Une concentration élevée d'acide chlorhydrique dans le débit de composition gazeuse en amont de ladite enceinte d'acylation et de l'ordre de grandeur de la valeur maximale théorique de pression partielle susceptible d'être atteinte du fait de la quantité de chlorure d'acide gras déposé est indicatrice soit de conditions réactionnelles optimales, soit d'un taux d'humidité du matériau hydroxylé trop élevé conduisant à une hydrolyse du chlorure d'acide gras, pénalisante pour la réaction d'acylation.

Une concentration faible de chlorure d'acide gras dans le débit de composition gazeuse en amont de ladite enceinte d'acylation constitue un indice d'un défaut d'application du chlorure d'acide gras, soit de conditions réactionnelles optimales, soit d'une température trop faible dans ladite enceinte d'acylation et ne permettant pas la réaction d'acylation. Combinée à une concentration d'acide chlorhydrique significative, une telle concentration faible de chlorure d'acide gras est un indice de conditions réactionnelles optimales.

Une concentration de chlorure d'acide gras importante dans le débit de composition gazeuse en amont de ladite enceinte d'acylation peut indiquer soit un dépôt excessif de chlorure d'acide gras en amont, soit de conditions réactionnelles non optimales, notamment un débit de composition gazeuse trop élevé et/ou d'une température trop élevée dans ladite enceinte d'acylation. La mesure de la concentration du chlorure d'acide gras dans ladite enceinte d'acylation permet d'attester de conditions réactionnelles optimales, c'est-à-dire à pression de vapeur saturante, mais sans excès.

Une concentration de chlorure d'acide gras importante dans ladite enceinte d'acylation est indicatrice soit d'une application excessive de chlorure d'acide gras en amont, soit de conditions réactionnelles non optimales qui laissent subsister une quantité importante de chlorure d'acide gras en surface dudit matériau acylé, soit d'un débit de composition gazeuse trop faible.

Une concentration trop élevée d'acide chlorhydrique par rapport aux quantités stoechiométriques de la réaction d'acylation peut indiquer une réaction secondaire de dégradation du chlorure d'acide gras par de l'eau contenu dans le matériau hydroxylé.

Une première variante d'un dispositif, dit réacteur 1 d'acylation, d'acylation d'un matériau, dit matériau 30 hydroxylé, solide, porteur d'hydroxyles (-OH), dits hydroxyles réactogènes, accessibles et susceptibles de pouvoir réagir avec au moins un chlorure d'acide gras à l'état gazeux est représenté en figure 1. Ledit réacteur 1 d'acylation comprend des moyens 2 d'entrainement dudit matériau 30 hydroxylé en défilement entre un dévidoir 3 s'étendant en partie amont dudit réacteur 1 d'acylation et un organe 4 de collecte d'un matériau acylé s'étendant en partie aval dudit réacteur 1 d'acylation. Le sens de défilement dudit matériau 30,40,41 hydroxylé/acylé dans ledit réacteur d'acylation est indiqué par les flèches 43. Les moyens 2 d'entrainement sont adaptés pour permettre un défilement dudit matériau 30,40,41 hydroxylé avec une vitesse ajustable de défilement, notamment supérieure à 30 m/min, de préférence supérieure à 100 m/min. Le dévidoir 3 amont peut être un dévidoir de matériau hydroxylé conditionné sous forme d'un rouleau ou bobine et l'organe 4 de collecte peut être un organe permettant l'enroulement et le rembobinage du matériau 41 acylé. Toute autre forme de dévidoir 3 est possible, par exemple un dévidoir 3 de matériau hydroxylé conditionné sous forme d'une succession de feuillets plissés.

Ledit réacteur 1 d'acylation représenté en figure 1 comprend une enceinte, dite enceinte 5 d'acylation, délimitant un espace interne sous atmosphère gazeuse et présentant une entrée 6 amont dudit matériau 30 hydroxylé dans ladite enceinte 5 d'acylation et une sortie 7 aval d'un matériau 41 acylé prêt à être conditionné sur l'organe 4 de collecte. L'entrée 6 amont et la sortie 7 aval forment chacune une ouverture -notamment une fente- dans ladite enceinte 5 d'acylation s'étendant transversalement par rapport au défilement du matériau hydroxylé. La taille de l'ouverture d'entrée amont et de l'ouverture de sortie aval sont choisies pour ne pas contrarier le défilement du matériau hydroxylé et sont suffisamment réduites pour permettre un confinement contrôlé de l'atmosphère gazeuse dans ladite enceinte 5 d'acylation. Ladite enceinte 5 d'acylation forme un espace 38,8,39 interne sous atmosphère gazeuse et adaptée pour pouvoir être traversée longitudinalement par ledit matériau hydroxylé/acylé 30,40,41 entrainé en défilement d'amont en aval selon le sens 43 de défilement. Ladite enceinte 5 d'acylation présente des moyens 19,9,15 de chauffage de l'atmosphère gazeuse de ladite enceinte 5 d'acylation. Les moyens 19,9,15 de chauffage sont adaptés pour permettre que l'atmosphère gazeuse d'au moins une zone -notamment une zone 8 centrale- de ladite enceinte 5 d'acylation soit portée à une température, dite température (Tg) de greffage, inférieure à la température de vaporisation du chlorure d'acide gras et suffisante pour permettre une acylation dudit matériau 30 hydroxylé traversant ladite enceinte 5 d'acylation. Les moyens 19,9,15 de chauffage peuvent être de tout type. Il peut s'agir d'échangeurs 19,9,15 de chaleur, adaptés pour chauffer l'atmosphère gazeuse par conduction. Rien n'empêche cependant que les moyens 19,9,15 de chauffage soient des moyens de chauffage inductifs ou radiatifs. Dans un mode de réalisation particulier, les échangeurs 19,9,15 de chaleur sont adaptés pour pouvoir chauffer l'atmosphère de ladite enceinte 5 d'acylation selon un gradient thermique par lequel la température augmente d'amont en aval dans ladite enceinte 5 d'acylation, au moins une partie centrale de ladite enceinte 5 d'acylation étant maintenue à ladite température (Tg) de greffage. La réaction d'acylation par chromatogénie est ainsi optimisée.

Ledit réacteur 1 d'acylation représenté en figure 1 comprend des moyens 11 d'introduction d'un débit de composition gazeuse en partie aval de ladite enceinte 5 d'acylation. Ils permettent d'établir un débit de composition gazeuse -notamment un débit d'air atmosphérique- traversant ladite enceinte 5 d'acylation d'aval en amont et à contrecourant par rapport au sens 43 de défilement dudit matériau 30,40,41 hydroxylé/acylé. Dans certains modes de réalisation, les moyens 11 d'introduction du débit d'air comprennent une turbine configurée pour prélever de l'air atmosphérique et former le débit d'air entrant dans ladite enceinte 5 d'acylation par une entrée 47 aval du débit d'air et sortant de ladite enceinte 5 d'acylation par une sortie 51 amont. Dans certains modes de réalisation, l'entrée 47 aval du débit d'air coïncide avec la fente 7 de sortie du matériau acylé de sorte que le débit d'air 36 entrant dans ladite enceinte 5 d'acylation par la fente 7 de sortie du matériau hydroxylé s'oppose à -notamment empêche totalement- la fuite de l'atmosphère gazeuse de ladite enceinte 5 d'acylation par la fente 7. Les moyens 11 d'introduction du débit de composition gazeuse comprennent des moyens d'ajustement de ce débit. Ils peuvent aussi comprendre des moyens de chauffage de ce débit d'air préalablement à son introduction dans ladite enceinte 5 d'acylation. L'entrée 47 aval du débit d'air dans ladite enceinte 5 d'acylation forme une fente s'étendant transversalement sur toute la largeur de ladite enceinte 5 d'acylation et sur toute la largeur de la laize de matériau acylé. Elle permet la formation d'une lame d'air de répartition du débit d'air sur toute la largeur de ladite enceinte 5 d'acylation. Rien n'empêche que les moyens 11 d'introduction du débit d'air en partie aval de ladite enceinte 5 d'acylation comprennent une pompe 11' d'aspiration de l'atmosphère gazeuse de ladite enceinte 5 d'acylation, débouchant en sortie 51 amont du débit d'air de ladite enceinte 5 d'acylation.

Dans le réacteur 1 d'acylation représenté en figure 1 et lors de la mise en oeuvre du procédé selon l'invention, le débit d'air circulant à contrecourant dans ladite enceinte 5 d'acylation forme une lame d'air dont le débit est ajusté de façon à être suffisant pour permettre un entrainement de l'acide chlorhydrique formé du fait de la réaction d'acylation, et de façon à être suffisamment faible pour maintenir dans l'atmosphère gazeuse de ladite enceinte 5 d'acylation une concentration de chlorure d'acide gras suffisante pour permettre la réaction.

La sortie 51 amont du débit d'air débouche, entrainé le cas échéant par la pompe 11' d'aspiration, sur un dispositif 37 d'analyse de ce débit d'air. Le dispositif 37 d'analyse comprend des moyens d'analyse et de quantification des entités chimiques susceptibles d'être présentes dans ce débit d'air, notamment de l'acide chlorhydrique gazeux, du chlorure d'acide gras et, le cas échéant de la vapeur d'eau. Ledit réacteur 1 d'acylation comprend aussi un dispositif 52 d'analyse et de quantification du chlorure d'acide gras dans le débit d'air sortant de ladite enceinte 5 d'acylation, la composition de ce débit d'air sortant étant représentative de la composition de l'atmosphère gazeuse de ladite enceinte 5 d'acylation. De tels dispositifs 37,52 d'analyse permettent, en relation avec un dispositif 50 informatique, de contrôler le déroulement optimal de la réaction d'acylation et de fournir des instructions pour procéder, si nécessaire, à un ajustement d'au moins un paramètre de pilotage dudit réacteur 1 d'acylation.

Ledit réacteur 1 d'acylation comprend également un organe 24 d'extraction de l'acide chlorhydrique gazeux présent dans le débit d'air disposé en aval du dispositif 37 d'analyse par rapport au débit d'air. L'organe 24 d'extraction est adapté pour piéger l'acide chlorhydrique gazeux du débit d'air et pour libérer dans l'atmosphère terrestre un débit d'air sensiblement exempt d'acide chlorhydrique.

Ledit réacteur 1 d'acylation représenté en figure 1 comprend un dispositif 10 applicateur du chlorure d'acide gras sur ledit matériau 30 hydroxylé entrainé en défilement. Le dispositif 10 applicateur est à poste fixe et permet de déposer du chlorure d'acide gras en continu sur le matériau 30 hydroxylé entrainé en défilement. Le dispositif 10 applicateur est choisi pour pouvoir réaliser un dépôt sur les deux faces principales dudit matériau 30 hydroxylé ou sur l'une seule de ses faces principales. Le dispositif 10 applicateur peut comprendre un dispositif d'impression, notamment un dispositif d'impression par flexographie ou un dispositif d'impression par héliographie. Le dispositif 10 applicateur peut comprendre un rouleau « anilox » dont les dimensions de ses cellules et leur densité surfacique sont adaptées à la quantité de chlorure d'acide gras à déposer.

Rien n'empêche de prévoir de réaliser un dépôt de chlorure d'acide gras sur une seule des deux faces principales dudit matériau hydroxylé, l'autre face dudit matériau hydroxylé étant masquée lors du dépôt par une nappe rotative appliquée sur la face opposée au dépôt et accompagnant le défilement dudit matériau hydroxylé. Rien n'empêche de prévoir d'enduire l'une des faces du matériau hydroxylé d'une couche d'un matériau -notamment d'amidon à haute mobilité rotationnelle- inapte à conférer de l'hydrophobie à cette face.

Ledit réacteur 1 d'acylation représenté en figure 1 comprend un dispositif 26 de chauffage dudit matériau 30 hydroxylé en amont du dispositif 10 applicateur du chlorure d'acide gras. Ce dispositif 26 de chauffage est optionnel. Il est adapté pour pouvoir porter ledit matériau 30 hydroxylé à une température propre à permettre le dépôt ultérieur du chlorure d'acide gras et son maintien à l'état liquide lors de son application sur le matériau hydroxylé. Le dispositif 26 de chauffage peut être de tout type, notamment un dispositif de chauffage radiatif (par exemple un dispositif de chauffage par infra-rouge) ou un échangeur de chaleur.

Dans une variante non représentée d'un réacteur 1 d'acylation selon l'invention, le dispositif applicateur peut comprendre d'une part un dispositif amont d'impression par flexographie ou un dispositif d'impression par héliographie permettant de déposer le chlorure d'acide gras en amas discontinus latéralement en surface du matériau hydroxylé et d'autre part un organe aval répartiteur du chlorure d'acide gras sur toute la surface dudit matériau hydroxylé. Un tel organe répartiteur peut présenter une surface de contact avec ledit matériau hydroxylé formée d'un velours pourvu d'éléments filiformes de velours. Un tel organe répartiteur permet de former un dépôt régulier en surface dudit matériau hydroxylé avec une densité de chlorure d'acide gras par mètre carré de matériau hydroxylé comprise entre 20 mg/m² et 1 g/m². Un tel organe répartiteur peut être du type « rouleau laqueur » et on réalise cette étape de répartition à une température comprise entre 40°C et 190°C.

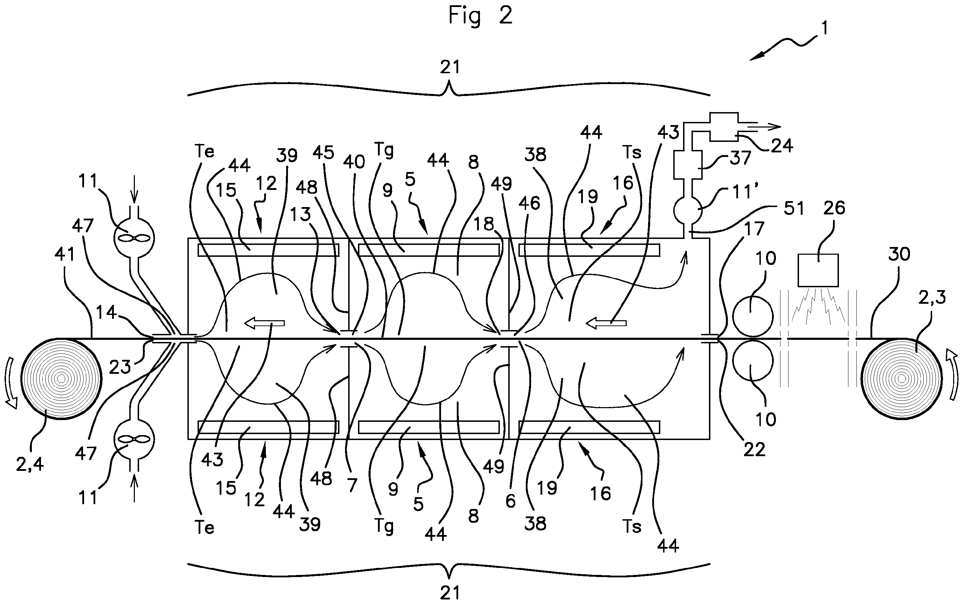

Une deuxième variante d'un réacteur 1 d'acylation selon l'invention est représenté en figure 2. Ledit réacteur 1 d'acylation comprend :
- des moyens 2 d'entrainement dudit matériau 30 hydroxylé ;
- un dispositif 10 applicateur du chlorure d'acide gras sur ledit matériau 30 hydroxylé entrainé en défilement ;
- un dispositif 26 de chauffage dudit matériau 30 hydroxylé en amont du dispositif 10 applicateur du(des) chlorure(s) d'acide(s) gras ;
- des moyens 11 d'introduction d'un débit d'air atmosphérique dans ladite enceinte 21 compartimentée et de circulation de ce débit d'air d'aval en amont et à contrecourant par rapport au sens 43 de défilement dudit matériau 30,40,41 hydroxylé/acylé dans ladite enceinte 21 compartimentée ;
- un organe 24 d'extraction de l'acide chlorhydrique gazeux présent dans le débit de composition gazeuse disposé en aval du dispositif 37 d'analyse par rapport au débit de composition gazeuse ;
tels que décrit en figure 1.

Ledit réacteur 1 d'acylation représenté en figure 2 comprend une enceinte 21 compartimentée présentant une entrée 22 amont dudit matériau 30 hydroxylé dans l'enceinte 21 compartimentée et une sortie 23 aval d'un matériau 41 acylé prêt à être conditionné dans l'organe 4 de collecte. Les entrée 22 amont et sortie 23 aval forment chacune une ouverture -notamment une fente- dans ladite enceinte 21 compartimentée s'étendant transversalement par rapport au défilement du matériau hydroxylé/acylé. La taille de l'ouverture d'entrée 22 amont et de l'ouverture de sortie 23 aval sont choisies pour ne pas gêner le défilement du matériau hydroxylé et sont suffisamment réduites pour permettre un confinement contrôlé de l'atmosphère gazeuse dans ladite enceinte 21 compartimentée. Ladite enceinte 21 compartimentée est formée de trois compartiments 16,5,12 juxtaposés et adaptés pour pouvoir être traversés l'un après l'autre par ledit matériau hydroxylé/acylé 30,40,41 entrainé en défilement de l'amont vers l'aval. Elle comprend, de l'amont vers l'aval, un premier compartiment s'étendant en partie amont dudit réacteur 1 d'acylation et formant une enceinte, dite enceinte 16 de préchauffage, délimitant un espace 38 interne sous atmosphère gazeuse présentant un gradient croissant de température entre l'entrée 17 et la sortie 18 dudit matériau 30 hydroxylé. Ladite enceinte 16 de préchauffage comprend au moins un échangeur 19 de chaleur -notamment une pluralité d'échangeurs- disposé(s) dans l'espace 38 interne de ladite enceinte 16 de préchauffage. L'(les) échangeur(s) 19 de chaleur est(sont) adapté(s) pour pouvoir chauffer l'atmosphère gazeuse de ladite enceinte 16 de préchauffage selon ledit gradient de préchauffage. Ainsi ledit matériau 30 hydroxylé traversant ladite enceinte 16 de préchauffage porté à ladite température (Tp) de préchauffage est séché au moins partiellement. Par exemple, un tel gradient de température peut s'étendre d'une température amont de l'ordre de la température atmosphérique -notamment de l'ordre de 40°C- à une température aval de l'ordre de la température (Tg) de greffage. Bien entendu, ce gradient de température est établi en tenant compte du débit d'air chaud traversant ladite enceinte 16 de préchauffage de l'aval vers l'amont, à contrecourant du matériau 30 hydroxylé en défilement.

Ladite enceinte 21 compartimentée comprend un deuxième compartiment s'étendant en aval de ladite enceinte 16 de préchauffage. Ce deuxième compartiment forme ladite enceinte 5 d'acylation, délimitant un espace 8 interne sous atmosphère gazeuse susceptible d'être chauffée à ladite température (Tg) de greffage, inférieure à la température de vaporisation de chaque chlorure d'acide gras -notamment comprise entre 150°C et 220°C, en particulier de l'ordre de 180°C- et apte à permettre une acylation dudit matériau 30 hydroxylé traversant ladite enceinte 5 d'acylation. Ladite enceinte 5 d'acylation comprend au moins un échangeur 9 de chaleur disposé dans l'espace 8 interne de ladite enceinte 5 d'acylation. L'échangeur 9 de chaleur est adapté pour pouvoir chauffer -notamment par convection- l'atmosphère gazeuse de ladite enceinte 5 d'acylation à ladite température (Tg) de greffage.

Ladite enceinte 21 compartimentée comprend aussi un troisième compartiment s'étendant en aval de ladite enceinte 5 d'acylation et en partie aval de ladite enceinte 21 compartimentée. Ce troisième compartiment forme une enceinte, dite enceinte 12 de recyclage, délimitant un espace 39 interne sous atmosphère gazeuse susceptible d'être chauffée à une température, dite température (Tr) de recyclage, inférieure à la température de vaporisation du chlorure d'acide gras et supérieure à ladite température (Tg) de greffage -notamment à une température comprise entre 180°C et 240°C, en particulier de l'ordre de 200°C-. Ladite température (Tr) de recyclage est choisie pour favoriser la conversion liquide/gaz du chlorure d'acide gras dans ladite enceinte 12 de recyclage.

Dans ledit réacteur 1 d'acylation représenté en figure 2, lors de la mise en oeuvre du procédé selon l'invention, le débit d'air atmosphérique circulant de l'aval vers l'amont dans ladite enceinte 21 compartimentée permet d'entrainer l'atmosphère gazeuse de ladite enceinte 12 de recyclage (et du chlorure d'acide gras à l'état gazeux) dans ladite enceinte 5 d'acylation. Le déclin de température entre les deux enceintes conduit à une condensation d'une partie du chlorure d'acide gras gazeux dans ladite enceinte 5 d'acylation. L'apport de chlorure d'acide gras dans ladite enceinte 5 d'acylation modifie l'équilibre liquide/gaz du chlorure d'acide gras dans ladite enceinte 5 d'acylation et favorise l'état de transition du chlorure d'acide gras et la réaction d'acylation. Le débit d'air permet aussi un entrainement de l'atmosphère gazeuse de ladite enceinte 5 d'acylation dans ladite enceinte 16 de préchauffage, de sorte que la diminution de température entre les deux enceintes 5,16 d'acylation et de préchauffage entraine une condensation du chlorure d'acide gras dans ladite enceinte 16 de préchauffage et son recyclage vers ladite enceinte 5 d'acylation du fait du défilement dudit matériau 30 hydroxylé.

Ladite enceinte 21 compartimentée comprend une première cloison 48 de séparation s'étendant entre ladite enceinte 12 de recyclage et ladite enceinte 5 d'acylation. Cette cloison 48 de séparation présente une ouverture d'entrée 13 dudit matériau 40 acylé dans ladite enceinte 12 de recyclage et de sortie 7 dudit matériau 40 acylé de ladite enceinte 5 d'acylation. La première cloison 48 de séparation présente également une ouverture 45 de sortie du débit de composition gazeuse coïncidant avec la fente 7 de sortie dudit matériau 40 acylé de ladite enceinte 5 d'acylation. Cette ouverture 45 de sortie d'air permet un contrôle du débit de composition gazeuse s'écoulant de ladite enceinte 12 de recyclage vers ladite enceinte 5 d'acylation. Ladite enceinte 21 compartimentée comprend une deuxième cloison 49 de séparation s'étendant entre ladite enceinte 5 d'acylation et ladite enceinte 16 de préchauffage. Cette cloison 49 de séparation présente une ouverture 6 d'entrée dudit matériau 40 hydroxylé dans ladite enceinte 5 d'acylation et de sortie 18 dudit matériau 30 hydroxylé de ladite enceinte 16 de préchauffage. La cloison 49 de séparation présente également une ouverture 46 de sortie d'air coïncidant avec la fente 6 d'entrée dudit matériau 40 acylé dans ladite enceinte d'acylation. Cette ouverture 46 permet un passage contrôlé du débit de composition gazeuse s'écoulant de ladite enceinte 5 d'acylation vers ladite enceinte 16 de préchauffage.

Ledit réacteur 1 d'acylation représenté en figure 2 comprend dans sa partie amont, en particulier dans la partie amont de ladite enceinte 16 de préchauffage, une sortie 51 du débit d'air atmosphérique débouchant dans un dispositif 37 d'analyse de ce débit d'air, tel que décrit en figure 1. Le dispositif 37 d'analyse comprend des moyens d'analyse et de quantification des entités chimiques susceptibles d'être présentes dans le débit de composition gazeuse, notamment de la vapeur d'eau, de l'acide chlorhydrique gazeux et du chlorure d'acide gras. Un tel dispositif 37 d'analyse permet de déterminer si le déroulement de la réaction d'acylation est optimal et/ou si un ajustement d'au moins un paramètre dudit réacteur 1 d'acylation est à réaliser. Uniquement à titre d'exemple, un taux de vapeur d'eau élevé dans la composition gazeuse en sortie de ladite enceinte 16 de préchauffage est indicatif d'un matériau 30 hydroxylé présentant un taux d'humidité élevé et une augmentation de la température dans ladite enceinte 16 de préchauffage est à prévoir. Également, une concentration d'acide chlorhydrique gazeux faible dans la composition gazeuse en sortie 51 amont de ladite enceinte 16 de préchauffage est indicatif d'un déroulement non optimal et/ou incomplet de ladite réaction d'acylation. Il convient de procéder à un ajustement de la vitesse de défilement dudit matériau hydroxylé et/ou du débit d'air et/ou de ladite température (Tg) de greffage, par exemple, de façon que la concentration d'acide chlorhydrique gazeux dans le débit de composition gazeuse soit maximal. Une concentration élevée de chlorure d'acide gras dans le débit d'air peut être indicatif d'une part d'une acylation partielle et d'autre part d'un risque qu'un excès de chlorure d'acide gras reste sur ledit matériau acylé et en affecte ses propriétés d'hydrophobie. En tout état de cause, de telles analyses permettent d'ajuster objectivement les paramètres de contrôle dudit réacteur 1 d'acylation. De telles analyses peuvent être réalisée au moyen d'un ou de plusieurs dispositif(s) analytique(s) connus en eux-mêmes, par exemple au moyen d'un détecteur à ionisation de flamme et/ou d'un spectromètre de masse. De tels ajustements peuvent être réalisés automatiquement par des moyens 50 informatiques de contrôle dudit réacteur 1 d'acylation.

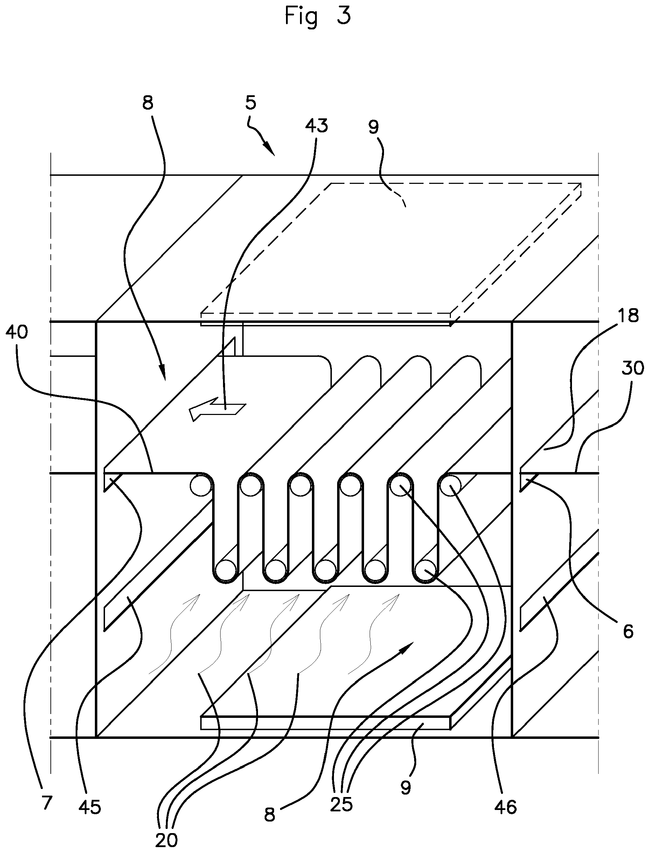

Un détail d'un réacteur 1 d'acylation selon une quatrième variante de l'invention, est représenté en figure 3. Dans ce détail, seule ladite enceinte 5 d'acylation est représentée. Ladite enceinte 5 d'acylation délimite un espace 8 interne sous atmosphère gazeuse dans lequel des moyens 9 de chauffage sont disposés à distance dudit matériau 30,40 hydroxylé/acylé traversant ladite enceinte 5 d'acylation. Les moyens 9 de chauffage sont adaptés pour porter la température de l'atmosphère gazeuse de ladite enceinte 5 d'acylation à ladite température (Tg) de greffage. Les moyens 9 de chauffage sont sans contact avec ledit matériau 30,40 hydroxylé/acylé de sorte que le chauffage de ce dernier est obtenu au contact de l'atmosphère gazeuse chauffée à ladite température (Tg) de greffage. Ladite enceinte 5 d'acylation comprend des rouleaux 25 guidage s'étendant dans l'espace 8 interne de ladite enceinte 5 d'acylation et permettant un guidage dudit matériau 30,40 hydroxylé/acylé dans ladite enceinte 5 d'acylation selon un parcours non linéaire. Les rouleaux 25 de guidage permettent d'accroître le temps de séjour du matériau 30,40 hydroxylé/acylé dans ladite enceinte 5 d'acylation et l'efficacité de la réaction d'acylation. Dans le mode de réalisation représenté, ledit réacteur 1 d'acylation comprend des moyens de brassage adaptés pour former dans ladite enceinte 5 d'acylation, un débit d'air, dit débit 20 transversal, selon une direction d'écoulement sensiblement parallèle au plan du matériau 30 hydroxylé et sensiblement orthogonale à la direction 43 de défilement du matériau 30 hydroxylé. Ledit débit 20 transversal est choisi pour ne pas modifier sensiblement le débit de composition gazeuse s'écoulant d'aval en amont dans ledit réacteur d'acylation. Bien entendu, de tels moyens de brassage et de formation dudit débit 20 transversal sont contrôlés par le dispositif 50 informatique pour que la concentration de chlorure d'acide gras dans ledit débit 20 transversal corresponde à la pression de vapeur saturante du chlorure d'acide gras à ladite température (Tg) de greffage.

Un schéma synoptique d'une variante d'un procédé d'acylation d'un matériau, dit matériau 30 hydroxylé, solide, porteur de groupements hydroxyles (-OH), dits hydroxyles réactogènes, accessibles et susceptibles de pouvoir réagir avec un chlorure d'acide gras 29 à l'état gazeux est représenté en figure 5. Ledit matériau 30 hydroxylé peut être un matériau cellulosique. Il peut s'agir d'un matériau papier ou d'un matériau carton, notamment d'un carton ondulé. Il peut aussi s'agir d'un tissu. Ledit matériau 30 hydroxylé peut présenter un état de surface irrégulier et de grande rugosité. Il peut être poreux ou non poreux. Rien n'empêche que ledit matériau 30 hydroxylé soit un matériau papier calandré présentant un état de surface régulier et de faible rugosité. Il peut aussi s'agir d'un matériau hydroxylé non poreux présentant des hydroxyles réactogènes portés par au moins un polymère porteur de tels hydroxyles réactogènes. Un tel polymère peut être le PVA (alcool polyvinylique). Ledit matériau hydroxylé peut présenter une couche de surface extérieure formée d'alcool polyvinylique. En particulier, il peut s'agir d'un matériau cellulosique, en particulier un matériau papier, rendu étanche à l'air et non poreux par application surfacique d'une couche de PVA. Ledit matériau hydroxylé est avantageusement souple, c'est-à-dire qui est susceptible de pouvoir se déformer sous l'effet de son propre poids. Ledit matériau hydroxylé peut être un matériau papier réticulé dans lesquels la mobilité rotationnelle des fibres de cellulose ainsi réticulées est restreinte et dont les propriétés de résistance mécanique en général et de résistance mécanique en conditions humides (« wet-strength ») en particulier sont améliorées. Ledit matériau hydroxylé peut être un matériau papier réticulé par au moins un groupement d'atomes de réticulation, par exemple réticulé par du 1-chloro-2,3-époxypropane (« épichlorhydrine » ou « épichlorohydrine »).

Dans un procédé selon l'invention, ledit matériau 30 hydroxylé, par exemple sous forme d'une laize conditionnée en rouleau, est entrainé en défilement selon une direction de défilement parallèle à la plus grande dimension de la laize entre un dévidoir s'étendant en partie amont dudit réacteur 1 d'acylation et un organe de collecte d'un matériau acylé s'étendant en partie aval dudit réacteur 1 d'acylation. Dans un procédé selon l'invention, on soumet ledit matériau 30 hydroxylé entrainé en défilement à un préchauffage 101. On peut réaliser ce préchauffage 101 par tout moyen, par exemple en soumettant le matériau 30 hydroxylé à un chauffage radiatif par un rayonnement infrarouge. Le préchauffage 101 permet d'élever la température dudit matériau 30 hydroxylé à une température facilitant le dépôt du chlorure d'acide gras 28 à l'état liquide. On forme un matériau 31 hydroxylé préchauffé, prêt à recevoir une composition 28 contenant au moins un chlorure d'acide gras.

On procède à une étape 102 de dépôt en continu à poste fixe d'une telle composition 28 comprenant au moins un chlorure d'acide gras sur le matériau 31 hydroxylé. La composition 28 de dépôt peut comprendre un ou plusieurs chlorures d'acide gras. Elle peut être formée uniquement d'au moins un chlorure d'acide gras ou d'un chlorure d'acide gras unique. Le chlorure d'acide gras est choisi dans le groupe formé des chlorures d'acide de formule R-CO-Cℓ dans laquelle R est une chaine hydrocarbonée présentant un nombre d'atomes de carbone compris entre 17 (borne inclue) et 29 (borne inclue), notamment compris entre 21 (borne inclue) et 29 (borne inclue). Le chlorure d'acide gras peut être le chlorure de l'acide béhénique (C₂₂H₄₃OCℓ), le chlorure de l'acide palmitique (C₁₆H₃₁OCℓ) et/ou le chlorure de l'acide stéarique (C₁₈H₃₅Cℓ). On dépose la composition 28 de dépôt sur l'une et/ou l'autre des deux faces principales dudit matériau 31 hydroxylé.

Dans un procédé selon l'invention, on dépose en surface dudit matériau 31 hydroxylé, une quantité de chlorure d'acide gras par unité de surface dudit matériau 30,31 hydroxylé, nécessaire et suffisante pour que la concentration du chlorure d'acide gras dans l'atmosphère gazeuse de ladite enceinte d'acylation à ladite température (Tg) de greffage soit telle que la tension de vapeur du chlorure d'acide gras à l'état gazeux soit sensiblement égale à la pression de vapeur saturante du chlorure d'acide gras à ladite température (Tg) de greffage. En particulier, on dépose une quantité de chlorure d'acide gras choisie pour que le chlorure d'acide gras soit en léger excès stoechiométrique par rapport auxdits hydroxyles réactogènes dudit matériau 30,31 hydroxylé. Par exemple, on dépose par unité de surface dudit matériau 30,31 hydroxylé une quantité de chlorure(s) d'acide(s) gras de l'ordre de 1,5 fois la quantité maximale de chlorure(s) d'acide(s) gras susceptibles de réagir avec cette même surface de matériau 30,31 hydroxylé. En particulier, on réalise un tel dépôt en surface dudit matériau 30,31 hydroxylé avec une quantité de chlorure(s) d'acide(s) gras déposé par mètre carré de matériau 30,31 hydroxylé comprise entre 20 mg/m² et 1 g/m².

Dans le mode de réalisation représenté en figure 5, le chlorure d'acide gras à l'état liquide est appliqué en surface dudit matériau hydroxylé préalablement à son entrée dans ladite enceinte d'acylation. Rien n'empêche cependant de prévoir d'appliquer le chlorure d'acide gras à l'état liquide en surface dudit matériau hydroxylé au cours d'une phase 104 de séchage dudit matériau hydroxylé dans ladite enceinte 16 de préchauffage. Rien n'empêche de prévoir d'appliquer le chlorure d'acide gras à l'état liquide en surface sur ledit matériau hydroxylé en défilement dans ladite enceinte d'acylation à ladite température (Tg) de greffage ou à une température proche de ladite température (Tg) de greffage.

Dans certains modes de réalisation d'un procédé d'acylation selon l'invention, l'étape 102 comprend un dépôt de la composition 28 de chlorure d'acide gras au moyen d'un dispositif d'impression choisi dans le groupe formé des dispositifs d'impression par flexographie et des dispositifs d'impression par héliographie. Par ce dépôt on forme un matériau, dit matériau 32 imprimé, enduit du chlorure d'acide gras et dans lequel le chlorure d'acide est réparti en surface dudit matériau 32 imprimé sous la forme d'amas discontinus. Lorsque le dépôt est réalisé au moyen d'un tel dispositif d'impression, on réalise une étape 103 de répartition et d'homogénéisation de ce dépôt. On réalise cette étape de répartition par brossage de surface au moyen d'un organe répartiteur présentant une surface de contact formée d'un velours pourvu d'éléments filiformes de velours non réactifs vis-à-vis du chlorure d'acide gras.

On forme par cette étape 103 de répartition un matériau 33 hydroxylé enduit d'un dépôt homogène et régulier du chlorure d'acide gras. Du fait de son entrainement en défilement, le matériau 33 enduit est introduit dans ladite enceinte 16 de préchauffage dont l'atmosphère gazeuse est chauffé eselon un gradient de température croissante d'amont vers l'aval.. Il en résulte une phase 104 de séchage dudit matériau 33 enduit par perte d'eau sous forme vapeur. La vapeur d'eau formée dans ladite enceinte 16 de préchauffage est transportée par un débit d'air circulant dans ladite enceinte 21 compartimentée à contrecourant du matériau 33 enduit. Cette phase de séchage conduit à un matériau 34 sensiblement déshydraté. Du fait de son entrainement en défilement, le matériau 34 déshydraté est introduit dans ladite enceinte 5 d'acylation portée à ladite température (Tg) de greffage. Ledit matériau 34 déshydraté entre, du fait de son défilement, en contact avec l'atmosphère gazeuse de ladite enceinte 5 d'acylation qui présente une pression partielle en chlorure d'acide gras gazeux sensiblement égale à la pression de vapeur saturante du chlorure d'acide gras à ladite température (Tg) de greffage. Du chlorure d'acide gras 29 à l'état gazeux réagissent avec ledit matériau 34 déshydraté pour former un matériau 40 acylé par réaction d'acylation chromatogénique. Du fait de cette réaction, de l'acide chlorhydrique 35 est libéré dans l'atmosphère gazeuse de ladite enceinte 5 d'acylation. L'acide chlorhydrique ainsi formé est entrainé par le débit 36 d'air circulant dans ladite enceinte 5 d'acylation en provenance de ladite enceinte 12 de recyclage et en direction de ladite enceinte 16 de préchauffage. L'entraînement de l'acide chlorhydrique 35 hors de ladite enceinte 5 d'acylation favorise la réaction d'acylation. La réaction d'acylation par synthèse chromatogénique est maintenue dans ladite enceinte 5 d'acylation du fait que le débit de composition 36 gazeuse circulant à contrecourant par rapport au défilement du matériau 34,40 déshydraté/acylé présente une pression partielle de chlorure(s) d'acide(s) gras 29 gazeux qui est faible et contribue au passage à l'état gazeux de chlorure(s) d'acide(s) gras à l'état liquide déposés sur le matériau hydroxylé/acylé.

Du fait de son entrainement en défilement, le matériau 40 acylé est introduit dans ladite enceinte 12 de recyclage qui délimite un espace 8 interne sous atmosphère gazeuse maintenue à ladite température (Te) d'extraction supérieure à ladite température (Tg) de greffage, mais inférieure à la température de vaporisation desdits au moins un chlorure d'acide. Du fait de l'augmentation de la température de l'atmosphère gazeuse entre ladite enceinte 5 d'acylation et ladite enceinte 12 de recyclage, du chlorure d'acide gras est susceptible de passer, lors d'une phase 106 d'extraction, de l'état liquide à l'état gazeux dans l'atmosphère gazeuse de ladite enceinte 12 de recyclage et est entrainé par le débit 36 d'air vers ladite enceinte 5 d'acylation. Il en résulte une extraction de chlorure d'acide gras à l'état liquide sur ledit matériau 40 acylé et un recyclage de chlorure d'acide gras à l'état gazeux et réactif dans ladite enceinte 5 d'acylation à la température (Tg) de greffage. Un matériau 41 acylé et sensiblement exempt de chlorure d'acide gras libre est formé à l'issue de la phase 106 d'extraction.

Dans un mode de réalisation non représenté, on soumet l'atmosphère gazeuse de ladite enceinte de recyclage à un traitement de brassage favorisant l'évaporation de chlorure d'acide gras liquide. Dans un autre mode de réalisation non représenté, une lame d'air -notamment une lame d'air chaud-, dite lame d'extraction, est appliquée sur ledit matériau acylé en aval de ladite enceinte de recyclage. Ladite lame d'extraction permet d'assurer une élimination la plus quantitative possible de chlorure d'acide gras résiduel dudit matériau acylé. Dans certains modes de réalisation, ladite lame d'extraction et le débit de composition gazeuse sont formés à partir d'un débit d'air commun.

Dans le procédé selon l'invention, le débit de composition 36 gazeuse -notamment le débit d'air 36 atmosphérique- est introduit en partie aval de ladite enceinte 21 compartimentée et de façon à circuler dans ladite enceinte 21 compartimentée à contrecourant par rapport au sens 43 de défilement dudit matériau 30,40 hydroxylé/acylé. Le débit d'air 36 circule dans ladite enceinte 12 de recyclage au contact des moyens 15 de chauffage, ce par quoi le débit de composition 36 gazeuse atteint ladite température (Tr) de recyclage. Le sens de circulation du débit d'air 36 est représenté en figure 5 par des flèches en traits pointillés. Le débit d'air 36, le cas échéant préalablement chauffé, est introduit dans ladite enceinte 12 de recyclage dont l'atmosphère gazeuse est maintenue à ladite température (Te) d'extraction. Le débit d'air 36 à ladite température (Te) d'extraction traversant ladite enceinte 12 de recyclage se charge de chlorure d'aide gras à l'état gazeux dont la pression partielle dans l'atmosphère gazeuse est nécessairement inférieure (du fait de la température (Te) d'extraction) à la pression de vapeur saturante. Il entraine dans ladite enceinte 5 d'acylation du chlorure d'acide gras à l'état gazeux avec une pression partielle nécessairement supérieure à la pression de vapeur saturante à ladite température (Tg) de greffage, conduisant à une condensation de chlorure d'acide gras dans ladite enceinte 5 d'acylation et à un recyclage de chlorure d'acide gras dans ladite enceinte 5 d'acylation. De l'acide chlorhydrique 35 formé du fait de la réaction d'acylation est entrainé par le débit d'air 36 vers ladite enceinte 16 de préchauffage. Dans ladite enceinte 16 de préchauffage, la pression de vapeur saturante du chlorure d'acide gras à l'état gazeux décroit du fait dudit gradient de préchauffage, et du chlorure d'acide gras passe de l'état gazeux à l'état liquide, de sorte que du chlorure d'acide gras à l'état liquide est recyclé dans ledit réacteur 1 d'acylation. Le débit d'air 36 appauvri en chlorure d'acide gras à l'état gazeux et enrichi en acide chlorhydrique 35 forme un débit de composition, dite composition 42 chlorhydrique, gazeuse comprenant de l'acide chlorhydrique 35 et du chlorure d'acide gras, impropre à être rejetée dans l'atmosphère terrestre. Dans certains modes de réalisation avantageux d'un procédé selon l'invention, il est procédé à une phase 108 d'analyse des composants de ladite composition 42 chlorhydrique, et en particulier à une analyse quantitative en chlorure d'acide gras. Les résultats d'une telle analyse 108 permettent un ajustement d'au moins un des paramètres de contrôle du procédé et dudit réacteur 1 d'acylation. Il est également procédé à une phase 107 de piégeage de l'acide chlorhydrique présent dans ladite composition 42 chlorhydrique et de production d'un débit de composition 36 gazeuse propre à être rejetée dans l'atmosphère terrestre ou recyclée dans ledit réacteur 1 d'acylation selon l'invention.

Dans un procédé selon l'invention, on quantifie le chlorure d'acide gras gazeux présent dans le débit d'air atmosphérique sortant de ladite enceinte compartimentée. Une telle quantification permet de révéler qu'une quantité excessive de chlorure d'acide gras est déposée sur ledit matériau hydroxylé et/ou un défaut de recyclage du chlorure d'acide gras.

Le procédé selon l'invention permet de former un matériau acylé hydrophobe. On qualifie l'hydrophobie dudit matériau acylé par la valeur de l'angle de contact d'une goutte d'eau pure déposée sur ledit matériau acylé, l'angle de contact étant l'angle formé entre le plan principal du matériau acylé et la droite tangente à la surface de la goutte d'eau au point de contact de la goutte d'eau sur le matériau acylé. Typiquement, la valeur de l'angle de contact pour un matériau acylé obtenu par un procédé selon l'invention est comprise entre 90° et 150°, la valeur d'angle de contact de 150° correspondant à un matériau acylé particulièrement hydrophobe et déperlant. On peut qualifier la qualité de l'acylation et l'hydrophobie dudit matériau acylé en évaluant la durée pendant laquelle cette valeur de l'angle de contact comprise entre 90° et 150° se maintient à température ambiante. On peut aussi qualifier la qualité de l'acylation et l'hydrophobie dudit matériau acylé par le test dit « test d'étanchéité de la poche d'eau » dans lequel on observe l'étanchéité d'une poche d'eau formée dudit matériau acylé par la mesure de la perte d'eau (compte tenu de l'évaporation). On peut aussi qualifier la qualité de l'acylation et l'hydrophobie dudit matériau acylé par la déperlance, c'est-à-dire la propriété dudit matériau acylé de permettre à une goutte d'eau formée en surface dudit matériau acylé de rouler sur la surface, en adhérant ou non à la surface du matériau acylé. Une déperlance satisfaisante correspond à un angle de contact d'environ 150°.

### EXEMPLE 1 - Comparaison de l'acylation d'un matériau hydroxylé imprégné ou non de chlorure d'acide stéarique par un débit d'air saturé en chlorure d'acide stéarique

On place, dans une étuve maintenue à 160°C, un récipient clos contenant plusieurs pièces d'un même matériau non tissé polymérique imprégné de chlorure d'acide stéarique en proportion massique de 2%, à titre de diffuseur de chlorure d'acide stéarique. Après 30 minutes, le chlorure d'acide stéarique liquide étant équilibré avec le chlorure d'acide stéarique gazeux, on introduit deux pièces d'essuie-tout cellulosique, l'une chargée de chlorure d'acide stéarique, l'autre non chargée de chlorure d'acide stéarique. On maintient les deux pièces d'essuie-tout dans le récipient clos pendant 2 minutes. On retire les deux pièces du récipient. Leur hydrophobie est analysée par ledit « test d'étanchéité de la poche d'eau ». La pièce imprégnée initialement de chlorure d'acide stéarique apparait parfaitement hydrophobe avec une imperméabilité totale et maintenue dans le temps. Au contraire, la pièce non imprégnée initialement de chlorure d'acide stéarique n'apparait que peu hydrophobe et non étanche lors dudit test d'étanchéité. Cet exemple montre que la mise en contact d'une phase gazeuse saturée en chlorure d'acide stéarique et d'une pièce de papier non chargé en réactif permet le greffage de l'échantillon de papier mais avec une plus faible efficacité. A l'inverse, un échantillon de papier chargé en réactif et placé dans une enceinte saturée en réactif réagit de façon très satisfaisante.

### EXEMPLE 2 - Comparaison de l'acylation d'un matériau hydroxylé imprégné de chlorure d'acide stéarique par un débit d'air non saturé en chlorure d'acide stéarique

Une pièce d'essuie-tout cellulosique imprégnée de chlorure d'acide stéarique à raison de 0,5% poids/poids, est placée sur l'embout d'un aspirateur -utilisé à titre de générateur de débit d'air- puis chauffée au moyen d'un sèche-cheveux propulsant de l'air à une température de l'ordre de 150°C. La pièce d'essuie-tout est ensuite placée dans une étuve maintenue à la température de 150°C puis testée pour son hydrophobie par trempage dans de l'eau. La zone correspondant à l'application de l'embout de l'aspirateur n'apparait que faiblement hydrophobe et humide, la zone périphérique de la pièce apparaissant parfaitement hydrophobe. Cet exemple montre qu'un débit de composition gazeuse exempt de chlorure d'acide stéarique appliqué sur un matériau cellulosique de type papier conduit à l'élimination du chlorure d'acide stéarique et ne permet pas l'acylation.

### EXEMPLE 3 - Comparaison de l'effet du chauffage par contact avec une surface chaude et de l'effet du chauffage sans contact avec une surface chaude sur l'acylation d'un matériau hydroxylé imprégné de chlorure d'acide stéarique

On dispose une pièce d'essuie-tout cellulosique imprégnée de chlorure d'acide stéarique sur une surface plane rigide et on applique en face supérieure de ladite pièce un fer à repasser chauffant à la température de 200°C. On observe immédiatement un brunissement de la pièce d'essuie-tout cellulosique. Par comparaison, on place une pièce identique d'essuie-tout cellulosique imprégnée de chlorure d'acide stéarique dans une étuve maintenue à la température de 200°C. Aucun brunissement n'est observé pour un temps de chauffage équivalent. Cet exemple montre qu'une pièce d'un matériau cellulosique soumise à une température élevée en présence d'acide chlorhydrique est dégradée alors qu'une pièce équivalente placée à la même température dans une phase gazeuse chaude ne présente pas cette dégradation et reste intact.

EXEMPLE 4 - Un exemple de procédé selon l'invention est décrit ci-après. Une laize de papier à titre de matériau hydroxylé, de grammage de 100 g/m² et d'une largeur de 2 m est entrainée en défilement à une vitesse de 10 m/s à travers une enceinte d'acylation dont l'atmosphère est maintenue à la température de 180°C. La vitesse de défilement de la laize dans ladite enceinte d'acylation est de 10 m/s. En amont de ladite enceinte d'acylation, on applique en continu sur l'une des faces du papier en défilement, une quantité de chlorure d'acide stéarique à l'état liquide à raison de 0,2 g de chlorure d'acide stéarique par mètre carré (m²) de papier en défilement. 4 g de chlorure d'acide stéarique sont ainsi déposés par seconde. Un débit de 10 L/s d'air atmosphérique à titre de composition gazeuse s'écoulant à contrecourant du papier est établi dans ladite enceinte d'acylation. Le débit d'air dans ladite enceinte d'acylation entraine 1,17 g de chlorure d'acide stéarique gazeux par seconde à raison de 0,117 g/L de chlorure d'acide stéarique gazeux dans le débit gazeux, en considérant que la concentration de chlorure d'acide stéarique gazeux à la pression de vapeur saturante est de 117 g/m³ à la température de 180°C. Le chlorure d'acide stéarique non gazeux restant sur le papier réagit avec lesdits hydroxyles réactogènes du papier en passant par l'état de transition liquide/vapeur. Lors de cette réaction, 0,28 g/s d'acide chlorhydrique gazeux sont libérés dans le débit de composition gazeuse à raison de 0,028 g/L.

Le dosage en continu de l'acide chlorhydrique libéré dans le débit d'air du fait de la réaction d'acylation constitue un indicateur fiable du déroulement de la réaction d'acylation. Une concentration faible est représentative d'une réaction de greffage peu efficace. Une concentration forte peut être indicatrice d'une dégradation anormale du chlorure d'acide stéarique, par exemple d'une humidité du papier trop importante.

Le dosage de la concentration du chlorure d'acide stéarique en différentes zones du réacteur d'acylation permet également le « monitoring » chimique du procédé d'acylation. Une concentration de chlorure d'acide stéarique dans l'atmosphère gazeuse de l'enceinte d'acylation qui est inférieure à la concentration correspondant à la tension de vapeur saturante, peut indiquer que la quantité de chlorure d'acide stéarique déposée en surface du papier est insuffisante ou que le débit d'air est trop important. Une concentration de chlorure d'acide stéarique trop importante dans le débit d'air en sortie de ladite enceinte d'acylation peut être indicative d'un dépôt de chlorure d'acide stéarique en excès. La détermination en continu des concentrations d'acide chlorhydrique et de chlorure d'acide stéarique dans l'ensemble du réacteur d'acylation et au cours des différentes phases du procédé est essentielle pour maitriser et optimiser les conditions de cette réaction.

Aux fins de l'optimisation de la réaction d'acylation, on ajuste notamment la vitesse de défilement de la laize de papier, la température (Tg) de greffage et le débit d'air de façon que la concentration d'acide chlorhydrique libéré dans le débit d'air s'échappant de ladite enceinte d'acylation tende à correspondre au plus près, à la quantité de chlorure d'acide stéarique déposé en surface du papier, indicatrice d'un rendement de réaction optimal. Cette correspondance permet de déterminer si la réaction se déroule de façon optimale et d'en optimiser, le cas échéant, le déroulement. Une concentration d'acide chlorhydrique gazeux libéré dans le débit d'air, inférieure à la concentration maximale théorique tenant compte de la quantité de chlorure d'aide stéarique déposé constitue un indicateur de conditions réactionnelles non optimales. Ces conditions réactionnelles non optimales peuvent être liées à une concentration de chlorure d'acide stéarique dans l'enceinte d'acylation inférieure à la concentration correspondant à la pression de vapeur saturante. Cette concentration de chlorure d'acide stéarique est mesurée dans ladite enceinte d'acylation par des moyens conventionnels d'analyse -par exemple au moyen d'un détecteur à ionisation de flamme-. Il convient alors d'ajuster la température de l'atmosphère gazeuse dans ladite enceinte d'acylation et/ou le débit d'air et/ou la vitesse de défilement de la laize de papier dans ladite enceinte d'acylation. Rien n'empêche de prévoir d'augmenter le temps de séjour de la laize de papier dans ladite enceinte d'acylation en augmentant la longueur du trajet parcouru par la laize de papier dans ladite enceinte d'acylation au moyen d'embarrages. L'analyse simultanée de la concentration d'acide chlorhydrique et de la concentration de chlorure d'acide stéarique entrainés dans le débit d'air permet un ajustement optimal des paramètres de pilotage du réacteur d'acylation et de contrôle du procédé d'acylation.

En particulier, il est indispensable de contrôler ladite température (Tg) de greffage dans ladite enceinte d'acylation, ladite température (Te) d'extraction dans ladite enceinte de recyclage et/ou ledit gradient de préchauffage selon le chlorure d'acide gras utilisé. À cet égard, La tension de vapeur saturante du chlorure d'acide stéarique n'est que de 59 g/m³ à 160°C, mais de 117 g/m³ à 180°C. La tension de vapeur saturante du chlorure d'acide palmitique est 107 g/m³ à 160°C et de 205 g/m³ à 160°C à 180°C. Un pilotage fin des conditions thermiques et de rhéologie des gaz dans ladite enceinte d'acylation est indispensable pour tenir compte de ces variations.

Parallèlement, la détection de chlorure d'acide stéarique entrainé en concentration élevée dans le débit d'air en amont de ladite enceinte d'acylation constitue un indicateur de conditions réactionnelles non optimales ou d'un dépôt excessif de chlorure d'acide stéarique. Par contre, la détection d'une concentration faible de chlorure d'acide stéarique entrainé dans le débit d'air en amont de ladite enceinte d'acylation, combinée à une concentration d'acide chlorhydrique tendant à correspondre au plus près à la quantité de chlorure d'acide stéarique déposé sur la laize de papier constitue un indicateur de conditions réactionnelles optimisées.

## Revendications

1. Procédé d'acylation d'un matériau, dit matériau (30) hydroxylé, solide, porteur de groupements hydroxyles (-OH), dits hydroxyles réactogènes, accessibles et susceptibles de pouvoir réagir avec au moins un chlorure d'acide gras (29) à l'état gazeux, dans lequel :
- ledit matériau (30) hydroxylé est entrainé en défilement à travers une enceinte, dite enceinte (5) d'acylation, délimitant un espace interne sous atmosphère gazeuse ;
- un chlorure d'acide gras (28) à l'état liquide est appliqué en surface dudit matériau (30) hydroxylé entrainé en défilement ;
- l'atmosphère gazeuse de ladite enceinte (5) d'acylation est chauffée de façon que la température de l'atmosphère gazeuse au contact dudit matériau (30) hydroxylé entrainé en défilement dans ladite enceinte (5) d'acylation soit à une température, dite température (Tg) de greffage, inférieure à la température de vaporisation du chlorure d'acide gras et suffisante pour permettre une acylation dudit matériau (30) hydroxylé traversant ladite enceinte (5) d'acylation ;
- un débit d'une composition gazeuse s'écoulant d'aval en amont dans ladite enceinte (5) d'acylation à contrecourant dudit matériau (30) hydroxylé entrainé en défilement est maintenu ;
ce par quoi :
o un matériau, dit matériau (40) acylé, entrainé en défilement est formé du fait d'une réaction d'acylation par greffage covalent se produisant dans ladite enceinte (5) d'acylation entre au moins une partie desdits hydroxyles réactogènes et du chlorure d'acide gras (29) à l'état gazeux, et ;
o de l'acide chlorhydrique (35) produit du fait de la réaction d'acylation est entrainé d'aval en amont par le débit de composition gazeuse ;
**caractérisé en ce que** le débit de la composition (36) gazeuse est ajusté de façon que du chlorure d'acide gras soit maintenu dans l'atmosphère gazeuse de ladite enceinte (5) d'acylation à une concentration telle que le chlorure d'acide gras (29) à l'état gazeux soit présent dans l'atmosphère gazeuse de ladite enceinte (5) d'acylation avec une pression partielle sensiblement égale à la pression de vapeur saturante du chlorure d'acide gras à ladite température (Tg) de greffage.

2. Procédé selon la revendication 1, **caractérisé en ce que** le chlorure d'acide gras et l'acide chlorhydrique (35) sont quantifiés dans au moins l'un des fluides choisis parmi le débit de composition (36) gazeuse sortant de ladite enceinte (5) d'acylation et l'atmosphère gazeuse de ladite enceinte (5) d'acylation, et ;
**en ce qu'**au moins l'un des paramètres choisis dans le groupe formé de :
- la quantité dudit chlorure d'acide gras (28) appliqué par unité de surface dudit matériau (30) hydroxylé entrainé en défilement ;
- la vitesse de défilement du matériau (30) hydroxylé à travers ladite enceinte (5) d'acylation ;
- du temps de séjour du matériau (30) hydroxylé dans ladite enceinte (5) d'acylation ;
- le débit de la composition (36) gazeuse ;
- la température de la composition (36) gazeuse, et ;
- ladite température (Tg) de greffage dans ladite enceinte (5) d'acylation ;
est ajusté en fonction de cette quantification de façon à :
▪ maximiser la concentration d'acide chlorhydrique (35) gazeux, et à ;
▪ minimiser la concentration du chlorure d'acide gras ;
dans le débit de composition (36) gazeuse en amont de ladite enceinte (5) d'acylation.

3. Procédé selon l'une des revendications 1 ou 2, **caractérisé en ce que** ledit matériau (40) acylé entrainé en défilement est soumis à un recyclage de chlorure d'acide gras en excès, dans lequel :
- ledit matériau (40) acylé entrainé en défilement traverse une enceinte, dite enceinte (12) de recyclage, s'étendant en aval de ladite enceinte (5) d'acylation et délimitant un espace interne sous atmosphère gazeuse ;
- l'atmosphère gazeuse de ladite enceinte (12) de recyclage étant portée à une température, dite température (Te) d'extraction, supérieure à ladite température (Tg) de greffage et inférieure à la température de vaporisation de chaque chlorure d'acide gras ;
- le débit de composition (36) gazeuse s'écoule dans ladite enceinte (12) de recyclage à contrecourant du défilement dudit matériau (40) acylé puis dans ladite enceinte (5) d'acylation de sorte que du chlorure d'acide gras (28) en excès entrainé par ledit matériau (40) acylé dans ladite enceinte (12) de recyclage et vaporisé du fait de ladite température (Te) d'extraction est recyclé à l'état gazeux dans ladite enceinte (5) d'acylation.

4. Procédé selon l'une des revendications 1 à 3, **caractérisé en ce que** le matériau (30) hydroxylé entrainé en défilement est soumis à un préchauffage dans une enceinte, dite enceinte (16) de préchauffage, disposée en amont de ladite enceinte (5) d'acylation et délimitant un espace interne sous atmosphère gazeuse, adaptée pour pouvoir être traversée par ledit matériau (30) hydroxylé en défilement ;
l'atmosphère gazeuse de ladite enceinte (16) de préchauffage présentant un gradient, dit gradient de préchauffage, croissant de température s'étendant entre une entrée (17) amont dudit matériau hydroxylé dans ladite enceinte (16) de préchauffage et une sortie (18) aval dudit matériau hydroxylé vers ladite enceinte (5) d'acylation.

5. Procédé selon les revendications 3 et 4, **caractérisé en ce que** ledit matériau (30,40) hydroxylé/acylé est entrainé en défilement à travers une enceinte (21) compartimentée, entre une entrée (22) amont et une sortie (23) aval de ladite enceinte (21) compartimentée, dans laquelle ;
- un premier compartiment de ladite enceinte (21) compartimentée est formé par ladite enceinte (16) de préchauffage s'étendant en partie amont de l'enceinte (21) compartimentée ;
- un deuxième compartiment de ladite enceinte (21) compartimentée est formé par ladite enceinte (12) de recyclage s'étendant en partie aval de ladite enceinte (21) compartimentée, et ;
- un troisième compartiment de ladite enceinte (21) compartimentée est formé par ladite enceinte (5) d'acylation, interposée entre ladite enceinte (16) de préchauffage et ladite enceinte (12) de recyclage ;
de façon que ledit matériau (30,40) hydroxylé/acylé traverse d'amont en aval ladite enceinte (16) de préchauffage, ladite enceinte (5) d'acylation et ladite enceinte (12) de recyclage.

6. Dispositif, dit réacteur (1) d'acylation, d'acylation d'un matériau, dit matériau (30) hydroxylé, solide, porteur d'hydroxyles (-OH), dits hydroxyles réactogènes, accessibles et susceptibles de pouvoir réagir avec un chlorure d'acide gras (29) à l'état gazeux, ledit réacteur (1) d'acylation comprenant :
- des moyens (2) d'entrainement en défilement dudit matériau (30) hydroxylé entre un dévidoir (3) dudit matériau (30) hydroxylé s'étendant en partie amont dudit réacteur (1) d'acylation et un organe (4) de collecte d'un matériau acylé s'étendant en partie aval dudit réacteur (1) d'acylation ;
- une enceinte, dite enceinte (5) d'acylation ;
o adaptée pour pouvoir être traversée par ledit matériau (30) hydroxylé entrainé en défilement entre une entrée (6) amont et une sortie (7) aval de ladite enceinte (5) d'acylation ;
o délimitant un espace (8) sous atmosphère gazeuse, et ;
o munie de moyens (9) de chauffage de cette atmosphère gazeuse à une température, dite température (Tg) de greffage, inférieure à la température de vaporisation du chlorure d'acide gras et apte à permettre une acylation dudit matériau (30) hydroxylé traversant ladite enceinte (5) d'acylation ;
- un dispositif (10) applicateur d'un chlorure d'acide gras à l'état liquide en surface dudit matériau (30) hydroxylé entrainé en défilement, le dispositif (10) applicateur s'étendant en amont de ladite enceinte (5) d'acylation, et ;
- des moyens (11) d'établissement d'un débit de composition (36) gazeuse adaptés pour que le débit de composition gazeuse traverse ladite enceinte (5) d'acylation de l'aval vers l'amont de ladite enceinte (5) d'acylation et à contrecourant par rapport au défilement dudit matériau (30) hydroxylé ;
**caractérisé en ce qu'**il comprend des moyens d'ajustement du débit de composition gazeuse, adaptés pour maintenir dans l'atmosphère gazeuse de ladite enceinte d'acylation une concentration de chlorure d'acide gras telle que du chlorure d'acide gras (29) à l'état gazeux soit présent dans l'atmosphère gazeuse de ladite enceinte (5) d'acylation avec une pression partielle sensiblement égale à la pression de vapeur saturante du chlorure d'acide gras à ladite température (Tg) de greffage.

7. Dispositif selon la revendication 6, **caractérisé en ce qu'**il comprend un dispositif (37) d'analyse adapté pour analyser et quantifier des espèces chimiques présentes dans le débit de composition gazeuse, le dispositif (37) d'analyse étant apte à produire des données de quantification représentatives de la concentration du chlorure d'acide gras et de la concentration l'acide chlorhydrique (35) dans le débit de composition gazeuse.

8. Dispositif selon la revendication 7, **caractérisé en ce qu'**il comprend des moyens (50) informatiques configurés pour recevoir les données de quantification et pour contrôler à partir de ces données de quantification, au moins l'un des organes dudit réacteur (1) d'acylation, choisis dans le groupe formé :
- des moyens (2) d'entrainement en défilement dudit matériau (30) hydroxylé ;
- du dispositif (10) d'application du chlorure d'acide gras en surface dudit matériau (30) hydroxylé ;
- des moyens (9) de chauffage de l'atmosphère gazeuse de ladite enceinte (5) d'acylation à ladite température (Tg) de greffage ;
- des moyens de chauffage de l'atmosphère gazeuse de ladite enceinte (12) de recyclage à ladite température (Tr) de recyclage ;
- des moyens de chauffage de l'atmosphère gazeuse de ladite enceinte (16) de préchauffage selon ledit gradient de préchauffage ;
- des moyens (11) d'établissement du débit de composition (36) gazeuse ;
- de moyens de contrôle de la température de la composition (36) gazeuse.

9. Dispositif selon l'une des revendication 6 à 8, **caractérisé en ce qu'**il comprend une enceinte, dite enceinte (12) de recyclage, disposée en aval de ladite enceinte (5) d'acylation, délimitant un espace (39) sous atmosphère gazeuse et adaptée pour pouvoir être traversée par ledit matériau (40) acylé en défilement entre une entrée (13) amont et une sortie (14) aval de ladite enceinte (12) de recyclage,
ladite enceinte (5) d'acylation et ladite enceinte (12) de recyclage étant en communication de composition gazeuse de façon que le débit de composition gazeuse traversant ladite enceinte (5) d'acylation de l'aval vers l'amont dudit réacteur (1) d'acylation traverse d'abord ladite enceinte (12) de recyclage puis ladite enceinte (5) d'acylation et à contrecourant par rapport au défilement dudit matériau (40) acylé ;
ladite enceinte (12) de recyclage comprenant des moyens (15) de chauffage de l'atmosphère gazeuse de ladite enceinte (12) de recyclage à une température, dite température (Te) d'extraction, supérieure à ladite température (Tg) de greffage et inférieure à la température de vaporisation du chlorure d'acide gras.

10. Dispositif selon l'une des revendications 6 à 9, **caractérisé en ce qu'**il comprend une enceinte, dite enceinte (16) de préchauffage, disposée en amont de ladite enceinte (5) d'acylation, adaptée pour pouvoir être traversée par ledit matériau hydroxylé en défilement entre une entrée (17) amont et une sortie (18) aval de ladite enceinte (16) de préchauffage et délimitant un espace (38) interne sous atmosphère gazeuse ;
ladite enceinte (16) de préchauffage étant équipée de moyens (19) de chauffage de l'atmosphère gazeuse de ladite enceinte (16) de préchauffage selon un gradient, dit gradient de préchauffage, croissant de température s'étendant entre une entrée (17) amont dudit matériau hydroxylé dans ladite enceinte (16) de préchauffage et une sortie (18) aval dudit matériau hydroxylé hors de ladite enceinte (16) de préchauffage.

11. Dispositif selon l'une des revendications 6 à 10, **caractérisé en ce qu'**il est formé d'une enceinte (21) compartimentée traversée longitudinalement par ledit matériau (30,40) hydroxylé/acylé entrainé en défilement entre une entrée (22) et une sortie (23) de ladite enceinte (21) compartimentée, un premier compartiment de ladite enceinte (21) compartimentée étant formé par ladite enceinte (16) de préchauffage s'étendant en partie amont de l'enceinte (21) compartimentée, un deuxième compartiment de ladite enceinte (21) compartimentée étant formé par ladite enceinte (12) de recyclage s'étendant en partie aval de ladite enceinte (21) compartimentée et un troisième compartiment de ladite enceinte (21) compartimentée étant formé par ladite enceinte (5) d'acylation s'étendant en partie intermédiaire de l'enceinte (21) compartimentée, interposée entre ladite enceinte (16) de préchauffage et ladite enceinte (12) de recyclage.

12. Dispositif selon l'une des revendications 6 à 11, **caractérisé en ce qu'**il est muni d'un organe (24) de rétention de l'acide chlorhydrique entrainé par le débit de composition (36) gazeuse et de libération d'un débit de composition gazeuse sensiblement exempte d'acide chlorhydrique.

13. Dispositif selon l'une des revendications 6 à 12, **caractérisé en ce qu'**au moins l'une de ladite enceinte (16) de préchauffage, de ladite enceinte (5) d'acylation, et de ladite enceinte (12) de recyclage est équipée d'une pluralité de rouleaux (25) de guidage du matériau (30,40) hydroxylé/acylé entrainé en défilement dans le réacteur (1) d'acylation, positionnés de façon à guider le matériau (30,40) hydroxylé/acylé entrainé en défilement selon un parcours non linéaire.

14. Dispositif selon l'une des revendications 6 à 13, **caractérisé en ce que** le dispositif (10) applicateur du chlorure d'acide gras à l'état liquide en surface dudit matériau (30) hydroxylé comprend un dispositif (27) répartiteur du chlorure d'acide gras en surface dudit matériau (30) hydroxylé, le dispositif (27) répartiteur étant un dispositif répartiteur rotatif présentant une surface d'application formée d'un velours pourvu d'éléments filiformes de velours, non réactifs vis-à-vis du chlorure d'acide gras et aptes à pouvoir :
o se charger du chlorure d'acide gras par contact avec le chlorure d'acide gras, et ;
o libérer du chlorure d'acide gras au contact dudit matériau hydroxylé, par contact des éléments filiformes du velours avec ledit matériau hydroxylé.

## Patentansprüche

1. Verfahren zum Acylieren eines als festes, hydroxyliertes Material (30) bezeichneten Materials, das als reaktogene Hydroxyle bezeichnete Hydroxylgruppen (-OH) trägt, die zugänglich und in der Lage sind, mit mindestens einem Fettsäurechlorid (29) im gasförmigen Zustand zu reagieren, wobei:
- das hydroxylierte Material (30) kontinuierlich durch eine Kammer geleitet wird, die als Acylierungskammer (5) bezeichnet wird und einen Innenraum unter einer Gasatmosphäre abgrenzt;
- ein Fettsäurechlorid (28) in flüssigem Zustand auf die Oberfläche des kontinuierlich durchgeleiteten hydroxylierten Materials (30) aufgebracht wird;
- die Gasatmosphäre der Acylierungskammer (5) so erhitzt wird, dass die Temperatur der Gasatmosphäre, die in Kontakt mit dem kontinuierlich durchgeleiteten hydroxylierten Material (30) in der Acylierungskammer (5) steht, eine als Pfropftemperatur (Tg) bezeichnete Temperatur ist, die niedriger ist als die Verdampfungstemperatur des Fettsäurechlorids und ausreicht, um eine Acylierung des hydroxylierten Materials (30) zu ermöglichen, das durch die Acylierungskammer (5) läuft;
- ein Strom einer gasförmigen Zusammensetzung von stromabwärts nach stromaufwärts in der Acylierungskammer (5) gegenläufig zu dem kontinuierlich durchgeleiteten hydroxylierten Material (30) aufrechterhalten wird;
wobei:
o ein kontinuierlich durchgeleitetes Material, das als acyliertes Material (40) bezeichnet wird, aufgrund einer kovalenten Pfropfacylierungsreaktion gebildet wird, die in der Acylierungskammer (5) zwischen mindestens einem Teil der reaktogenen Hydroxyle und dem Fettsäurechlorid (29) im gasförmigen Zustand stattfindet, und;
o die durch die Acylierungsreaktion entstehende Salzsäure (35) von dem Strom der gasförmigen Zusammensetzung von stromabwärts nach stromaufwärts geleitet wird;
**dadurch gekennzeichnet, dass** der Strom der gasförmigen Zusammensetzung (36) so eingestellt wird, dass Fettsäurechlorid in der Gasatmosphäre der Acylierungskammer (5) in einer solchen Konzentration aufrechterhalten wird, dass das Fettsäurechlorid (29) in gasförmigem Zustand in der Gasatmosphäre der Acylierungskammer (5) mit einem Partialdruck vorliegt, der im Wesentlichen gleich dem Sättigungsdampfdruck des Fettsäurechlorids bei der Pfropftemperatur (Tg) ist.

2. Verfahren nach Anspruch 1, **dadurch gekennzeichnet, dass** das Fettsäurechlorid und die Salzsäure (35) in mindestens einem der Fluide quantifiziert werden, das aus dem Strom der gasförmigen Zusammensetzung (36), der die Acylierungskammer (5) verlässt, und der gasförmigen Atmosphäre der Acylierungskammer (5) ausgewählt wird, und;
dadurch, dass mindestens einer der Parameter, der ausgewählt ist aus der Gruppe bestehend aus:
- der Menge des Fettsäurechlorids (28), die pro Flächeneinheit des kontinuierlich durchgeleiteten hydroxylierten Materials (30) aufgebracht wird;
- der Fließgeschwindigkeit des hydroxylierten Materials (30) durch die Acylierungskammer (5);
- der Verweilzeit des hydroxylierten Materials (30) in der Acylierungskammer (5);
- dem Strom der gasförmigen Zusammensetzung (36);
- der Temperatur der gasförmigen Zusammensetzung (36), und;
- der Pfropftemperatur (Tg) in der Acylierungskammer (5); entsprechend dieser Quantifizierung wie folgt angepasst wird, um im Strom der gasförmigen Zusammensetzung (36) stromaufwärts der Acylierungskammer (5):
▪ die Konzentration der gasförmigen Salzsäure (35) zu maximieren, und um;
▪ die Konzentration von Fettsäurechlorid
zu minimieren.

3. Verfahren nach einem der Ansprüche 1 oder 2, **dadurch gekennzeichnet, dass** das kontinuierlich durchgeleitete acylierte Material (40) einer Rückführung von überschüssigem Fettsäurechlorid unterzogen wird, wobei:
- das kontinuierlich durchgeleitete acylierte Material (40) eine als Rückführungskammer (12) bezeichnete Kammer durchläuft, die sich stromabwärts der Acylierungskammer (5) erstreckt und einen Innenraum unter einer gasförmigen Atmosphäre abgrenzt;
- die Gasatmosphäre der Rückführungskammer (12) auf eine als Extraktionstemperatur (Te) bezeichnete Temperatur gebracht wird, die höher als die Pfropftemperatur (Tg) und niedriger als die Verdampfungstemperatur jedes Fettsäurechlorids ist;
- der Strom der gasförmigen Zusammensetzung (36) gegenläufig zum Durchlauf des acylierten Materials (40) in die Rückführungskammer (12) und dann in die Acylierungskammer (5) fließt, sodass überschüssiges Fettsäurechlorid (28), das durch das acylierte Material (40) in die Rückführungskammer (12) getrieben wird und aufgrund der Extraktionstemperatur (Te) verdampft, in gasförmigem Zustand in die Acylierungskammer (5) zurückgeführt wird.

4. Verfahren nach einem der Ansprüche 1 bis 3, **dadurch gekennzeichnet, dass** das kontinuierlich durchgeleitete hydroxylierte Material (30) einer Vorerwärmung in einer als Vorwärmkammer (16) bezeichneten Kammer unterzogen wird, die stromaufwärts der Acylierungskammer (5) angeordnet ist und einen Innenraum unter einer Gasatmosphäre abgrenzt, der dafür geeignet ist, dass das durchgeleitete hydroxylierte Material (30) hindurchgeführt werden kann;
wobei die Gasatmosphäre der Vorwärmkammer (16) einen als Vorwärmgradient bezeichneten Gradienten aufweist, dessen Temperatur zwischen einem stromaufwärts gelegenen Einlass (17) des hydroxylierten Materials in der Vorwärmkammer (16) und einem stromabwärts gelegenen Auslass (18) des hydroxylierten Materials in Richtung der Acylierungskammer (5) ansteigt.

5. Verfahren nach den Ansprüchen 3 und 4, **dadurch gekennzeichnet, dass** das hydroxylierte/acylierte Material (30, 40) kontinuierlich durch eine unterteilte Kammer (21) zwischen einem stromaufwärts gelegenen Einlass (22) und einem stromabwärts gelegenen Auslass (23) der unterteilten Kammer (21) geleitet wird, wobei;
- ein erstes Fach der unterteilten Kammer (21) durch die Vorwärmkammer (16) gebildet wird, die sich im stromaufwärtigen Teil der unterteilten Kammer (21) erstreckt;
- ein zweites Fach der unterteilten Kammer (21) durch die Rückführungskammer (12) gebildet wird, die sich in den stromabwärtigen Teil der unterteilten Kammer (21) erstreckt, und;
- ein drittes Fach der unterteilten Kammer (21) durch die Acylierungskammer (5) gebildet wird, die zwischen der Vorwärmkammer (16) und der Rückführungskammer (12) angeordnet ist;
sodass das hydroxylierte/acylierte Material (30, 40) von stromaufwärts nach stromabwärts durch die Vorwärmkammer (16), die Acylierungskammer (5) und die Rückführungskammer (12) gelangt.

6. Vorrichtung, die als Acylierungsreaktor (1) bezeichnet wird, zum Acylieren eines als festes, hydroxyliertes Material (30) bezeichneten Materials, das als reaktogene Hydroxyle bezeichnete Hydroxylgruppen (-OH) trägt, die zugänglich und in der Lage sind, mit einem Fettsäurechlorid (29) im gasförmigen Zustand zu reagieren, wobei der Acylierungsreaktor (1) umfasst:
- Mittel (2) zum kontinuierlichen Durchleiten des hydroxylierten Materials (30) zwischen einer Rolle (3) des hydroxylierten Materials (30), die sich im stromaufwärtigen Teil des Acylierungsreaktors (1) erstreckt, und einem Element (4) zum Sammeln eines acylierten Materials, das sich im stromabwärtigen Teil des Acylierungsreaktors (1) erstreckt;
- eine als Acylierungskammer (5) bezeichnete Kammer;
∘ dafür geeignet ist, dass das kontinuierlich durchgeleitete hydroxylierte Material (30) zwischen einem stromaufwärts gelegenen Einlass (6) und einem stromabwärts gelegenen Auslass (7) durch die Acylierungskammer (5) laufen kann;
∘ einen Raum (8) unter einer Gasatmosphäre abgrenzt, und;
∘ mit Mitteln (9) zum Erhitzen dieser Gasatmosphäre auf eine als Pfropftemperatur (Tg) bezeichnete Temperatur ausgestattet ist, die niedriger ist als die Verdampfungstemperatur des Fettsäurechlorids und eine Acylierung des hydroxylierten Materials (30) ermöglicht, das durch die Acylierungskammer (5) läuft;
- eine Applikatorvorrichtung (10) für ein Fettsäurechlorid in flüssigem Zustand auf die Oberfläche des kontinuierlich durchgeleiteten hydroxylierten Materials (30), wobei sich die Applikatorvorrichtung (10) stromaufwärts der Acylierungskammer (5) erstreckt, und;
- Mittel (11) zum Erzeugen eines Stroms der gasförmigen Zusammensetzung (36), die dafür geeignet sind, dass der Strom der gasförmigen Zusammensetzung durch die Acylierungskammer (5) von stromabwärts nach stromaufwärts der Acylierungskammer (5) und gegenläufig zum Strom des hydroxylierten Materials (30) läuft;
**dadurch gekennzeichnet, dass** er Mittel zum Einstellen des Stroms der gasförmigen Zusammensetzung umfasst, die dafür geeignet sind, eine Konzentration von Fettsäurechlorid in der gasförmigen Atmosphäre der Acylierungskammer aufrechtzuerhalten, sodass das Fettsäurechlorid (29) in gasförmigem Zustand in der Gasatmosphäre der Acylierungskammer (5) mit einem Partialdruck vorliegt, der im Wesentlichen gleich dem Sättigungsdampfdruck des Fettsäurechlorids bei der Pfropftemperatur (Tg) ist.

7. Vorrichtung nach Anspruch 6, **dadurch gekennzeichnet, dass** sie eine Analysevorrichtung (37) umfasst, die dazu geeignet ist, im Strom der gasförmigen Zusammensetzung vorhandene chemische Spezies zu analysieren und zu quantifizieren, wobei die Analysevorrichtung (37) in der Lage ist, Quantifizierungsdaten zu erzeugen, die repräsentativ für die Konzentration von Fettsäurechlorid und die Konzentration von Salzsäure (35) im Strom der gasförmigen Zusammensetzung sind.

8. Vorrichtung nach Anspruch 7, **dadurch gekennzeichnet, dass** sie Computermittel (50) umfasst, die so konfiguriert sind, dass sie die Quantifizierungsdaten empfangen und anhand dieser Quantifizierungsdaten mindestens eines der Elemente des Acylierungsreaktors (1) steuern, das aus der Gruppe ausgewählt ist, die aus folgenden Elementen besteht:
- Mittel (2) zum kontinuierlichen Durchleiten des hydroxylierten Materials (30);
- der Vorrichtung (10) zum Aufbringen von Fettsäurechlorid auf die Oberfläche des hydroxylierten Materials (30);
- Mittel (9) zum Erhitzen der Gasatmosphäre der Acylierungskammer (5) auf die Pfropftemperatur (Tg);
- Mittel zum Erhitzen der Gasatmosphäre der Rückführungskammer (12) auf die Rückführungstemperatur (Tr);
- Mittel zum Erhitzen der Gasatmosphäre der Vorwärmkammer (16) entsprechend dem Vorwärmgradienten;
- Mittel (11) zum Erzeugen des Stroms der gasförmigen Zusammensetzung (36);
- Mittel zum Steuern der Temperatur der gasförmigen Zusammensetzung (36).

9. Vorrichtung nach einem der Ansprüche 6 bis 8, **dadurch gekennzeichnet, dass** sie eine als Rückführungskammer (12) bezeichnete Kammer umfasst, die stromabwärts von der Acylierungskammer (5) angeordnet ist, die einen Raum (39) unter einer gasförmigen Atmosphäre abgrenzt und dafür geeignet ist, dass das fließende acylierte Material (40) zwischen einem stromaufwärts gelegenen Einlass (13) und einem stromabwärts gelegenen Auslass (14) der Rückführungskammer (12) hindurchgeleitet werden kann,
wobei die Acylierungskammer (5) und die Rückführungskammer (12) in gasförmiger Zusammensetzungsverbindung stehen, sodass der Strom der gasförmigen Zusammensetzung, der durch die Acylierungskammer (5) von stromabwärts nach stromaufwärts des Acylierungsreaktors (1) fließt, zuerst durch die Rückführungskammer (12), dann durch die Acylierungskammer(5) und gegenläufig zum Durchlauf des acylierten Materials (40) geführt wird;
die Rückführungskammer (12) Mittel (15) zum Erhitzen der gasförmigen Atmosphäre der Rückführungskammer (12) auf eine als Extraktionstemperatur (Te) bezeichnete Temperatur umfasst, die höher als die Pfropftemperatur (Tg) und niedriger als die Verdampfungstemperatur des Fettsäurechlorids ist.

10. Vorrichtung nach einem der Ansprüche 6 bis 9, **dadurch gekennzeichnet, dass** sie eine als Vorwärmkammer (16) bezeichnete Kammer umfasst, die stromaufwärts der Acylierungskammer (5) angeordnet und dafür geeignet ist, dass das fließende hydroxylierte Material zwischen einem stromaufwärts gelegenen Einlass (17) und einem stromabwärts gelegenen Auslass (18) der Vorwärmkammer (16) durchlaufen kann, und die einen Innenraum (38) unter einer Gasatmosphäre abgrenzt;
wobei die Vorwärmkammer (16) mit Mitteln (19) zum Erhitzen der Gasatmosphäre der Vorwärmkammer (16) entsprechend einem als Vorwärmgradient bezeichneten Gradienten ausgestattet ist, dessen Temperatur zwischen einem stromaufwärts gelegenen Einlass (17) des hydroxylierten Materials in der Vorwärmkammer (16) und einem stromabwärts gelegenen Auslass (18) des hydroxylierten Materials außerhalb der Vorwärmkammer (16) ansteigt.

11. Vorrichtung nach einem der Ansprüche 6 bis 10, **dadurch gekennzeichnet, dass** sie aus einer unterteilten Kammer (21) besteht, durch die das kontinuierlich durchgeleitete hydroxylierte/acylierte Material (30, 40) zwischen einem Einlass (22) und einem Auslass (23) der unterteilten Kammer (21) in Längsrichtung geführt wird, wobei ein erstes Fach der unterteilten Kammer (21) durch die Vorwärmkammer (16) gebildet wird, die sich im stromaufwärts gelegenen Teil der unterteilten Kammer (21) erstreckt, ein zweites Fach der unterteilten Kammer (21) durch die Rückführungskammer (12) gebildet wird, die sich im stromabwärts gelegenen Teil der unterteilten Kammer (21) erstreckt, und ein drittes Fach der unterteilten Kammer (21) durch die Acylierungskammer (5) gebildet wird, die sich im Zwischenteil der unterteilten Kammer (21) erstreckt und zwischen der Vorwärmkammer (16) und der Rückführungskammer (12) angeordnet ist.

12. Vorrichtung nach einem der Ansprüche 6 bis 11, **dadurch gekennzeichnet, dass** sie mit einem Element (24) zum Zurückhalten der durch den Strom der gasförmigen Zusammensetzung (36) angetriebenen Salzsäure und zum Freisetzen eines Stroms der gasförmigen Zusammensetzung, die im Wesentlichen frei von Salzsäure ist, ausgestattet ist.

13. Vorrichtung nach einem der Ansprüche 6 bis 12, **dadurch gekennzeichnet, dass** mindestens eine von der Vorwärmkammer (16), der Acylierungskammer (5) und der Rückführungskammer (12) mit einer Vielzahl von Rollen (25) zum Führen des kontinuierlich laufenden hydroxylierten/acylierten Materials (30, 40) im Acylierungsreaktor (1) ausgestattet ist, die so positioniert sind, dass sie das kontinuierlich durchgeleitete hydroxylierte/acylierte Material (30, 40) entlang eines nichtlinearen Pfads führen.

14. Vorrichtung nach einem der Ansprüche 6 bis 13, **dadurch gekennzeichnet, dass** die Vorrichtung zum Aufbringen (10) des Fettsäurechlorids in flüssigem Zustand auf die Oberfläche des hydroxylierten Materials (30) eine Verteilervorrichtung (27) für das Fettsäurechlorid auf der Oberfläche des hydroxylierten Materials (30) umfasst, wobei die Verteilervorrichtung (27) eine rotierende Verteilervorrichtung mit einer Aufbringungsoberfläche ist, die aus einem Samt besteht, der mit fadenförmigen Samtelementen versehen ist, mit Fettsäurechlorid nicht reagiert und in der Lage ist:
∘ durch Kontakt mit dem Fettsäurechlorid mit dem Fettsäurechlorid beladen zu werden, und;
∘ bei Kontakt mit dem hydroxylierten Material durch Kontakt der fadenförmigen Samtelemente mit dem hydroxylierten Material Fettsäurechlorid freizusetzen.

## Claims

1. A process for acylating a material, called solid, hydroxylated material (30), bearing hydroxyl groups (-OH), called reactogenic hydroxyls, accessible and capable of reacting with at least one fatty acid chloride (29) in gaseous state, wherein:
- said hydroxylated material (30) is continuously run through an enclosure, called acylation enclosure (5), delimiting an internal space under a gaseous atmosphere;
- a fatty acid chloride (28) in liquid state is applied to the surface of said continuously run hydroxylated material (30) ;
- the gaseous atmosphere of said acylation enclosure (5) is heated so that the temperature of the gaseous atmosphere in contact with said continuously run hydroxylated material (30) in said acylation enclosure (5) is at a temperature, called grafting temperature (Tg), lower than the vaporization temperature of the fatty acid chloride and sufficient to allow an acylation of said hydroxylated material (30) passing through said acylation enclosure (5);
- a flow of a gaseous composition from downstream to upstream in said acylation enclosure (5) countercurrently to said continuously run hydroxylated material (30) is maintained;
whereby:
∘ a continuously run material, called acylated material (40), is formed due to a covalent grafting acylation reaction occurring in said acylation enclosure (5) between at least a portion of said reactogenic hydroxyls and fatty acid chloride (29) in gaseous state, and;
∘ hydrochloric acid (35) produced due to the acylation reaction is run from downstream to upstream by the flow of gaseous composition;
**characterised in that** the flow of the gaseous composition (36) is adjusted so that fatty acid chloride is maintained in the gaseous atmosphere of said acylation enclosure (5) at a concentration such that the fatty acid chloride (29) in gaseous state is present in the gaseous atmosphere of said acylation enclosure (5) with a partial pressure substantially equal to the saturated vapor pressure of the fatty acid chloride at said grafting temperature (Tg) .

2. The process according to claim 1, **characterised in that** the fatty acid chloride and the hydrochloric acid (35) are quantified in at least one of the fluids chosen from the flow of gaseous composition (36) leaving said acylation enclosure (5) and the gaseous atmosphere of said acylation enclosure (5), and;
**in that** at least one of the parameters chosen from the group consisting of:
- the quantity of said fatty acid chloride (28) applied per unit area of said continuously run hydroxylated material (30) ;
- the running speed of the hydroxylated material (30) through said acylation enclosure (5);
- the residence time of the hydroxylated material (30) in said acylation enclosure (5);
- the flow of the gaseous composition (36);
- the temperature of the gaseous composition (36), and;
- said grafting temperature (Tg) in said acylation enclosure (5); is adjusted according to this quantification so as to:
▪ maximise the concentration of gaseous hydrochloric acid (35), and to;
▪ minimise the concentration of fatty acid chloride;
in the flow of gaseous composition (36) upstream of said acylation enclosure (5).

3. The process according to one of claims 1 or 2, **characterised in that** said continuously run acylated material (40) is subjected to recycling of excess fatty acid chloride, wherein:
- said continuously run acylated material (40) passes through an enclosure, called recycling enclosure (12), extending downstream of said acylation enclosure (5) and delimiting an internal space under a gaseous atmosphere;
- the gaseous atmosphere of said recycling enclosure (12) being brought to a temperature, called extraction temperature (Te), higher than said grafting temperature (Tg) and lower than the vaporization temperature of each fatty acid chloride;
- the flow of gaseous composition (36) flows into said recycling enclosure (12) countercurrently to the running of said acylated material (40) then into said acylation enclosure (5) so that excess fatty acid chloride (28) driven by said acylated material (40) in said recycling enclosure (12) and vaporised due to said extraction temperature (Te) is recycled in gaseous state in said acylation enclosure (5) .

4. The process according to one of claims 1 to 3, **characterised in that** the continuously run hydroxylated material (30) is subjected to preheating in an enclosure, called preheating enclosure (16), arranged upstream of said acylation enclosure (5) and delimiting an internal space under a gaseous atmosphere, adapted to be able to be passed through by said running hydroxylated material (30);
the gaseous atmosphere of said preheating enclosure (16) having a gradient, called preheating gradient, increasing in temperature extending between an upstream inlet (17) of said hydroxylated material in said preheating enclosure (16) and a downstream outlet (18) of said hydroxylated material towards said acylation enclosure (5).

5. The process according to claims 3 and 4, **characterised in that** said hydroxylated/acylated material (30,40) is continuously run through a compartmentalised enclosure (21), between an upstream inlet (22) and a downstream outlet (23) of said compartmentalised enclosure (21), wherein;
- a first compartment of said compartmentalised enclosure (21) is formed by said preheating enclosure (16) extending in the upstream part of the compartmentalised enclosure (21) ;
- a second compartment of said compartmentalised enclosure (21) is formed by said recycling enclosure (12) extending in the downstream part of said compartmentalised enclosure (21), and;
- a third compartment of said compartmentalised enclosure (21) is formed by said acylation enclosure (5), interposed between said preheating enclosure (16) and said recycling enclosure (12);
so that said hydroxylated/acylated material (30,40) passes from upstream to downstream through said preheating enclosure (16), said acylation enclosure (5) and said recycling enclosure (12).

6. A device, called acylation reactor (1), for acylating a material, called solid, hydroxylated material (30), bearing hydroxyls (-OH), called reactogenic hydroxyls, accessible and capable of reacting with a fatty acid chloride (29) in gaseous state, said acylation reactor (1) comprising:
- means (2) for continuously running said hydroxylated material (30) between a reel (3) of said hydroxylated material (30) extending in the upstream part of said acylation reactor (1) and a member (4) for collecting an acylated material extending in the downstream part of said acylation reactor (1);
- an enclosure, called acylation enclosure (5);
∘ adapted to be able to be passed through by said continuously run hydroxylated material (30) between an upstream inlet (6) and a downstream outlet (7) of said acylation enclosure (5);
∘ delimiting a space (8) under a gaseous atmosphere, and;
∘ provided with means (9) for heating this gaseous atmosphere to a temperature, called grafting temperature (Tg), lower than the vaporization temperature of the fatty acid chloride and capable of allowing an acylation of said hydroxylated material (30) passing through said acylation enclosure (5);
- a applicator device (10) of a fatty acid chloride in liquid state to the surface of said continuously run hydroxylated material (30), the applicator device (10) extending upstream of said acylation enclosure (5), and;
- means (11) for establishing a flow of gaseous composition (36) adapted so that the flow of gaseous composition passes through said acylation enclosure (5) from downstream to upstream of said acylation enclosure (5) and countercurrently to the running of said hydroxylated material (30);
**characterised in that** it comprises means for adjusting the flow of gaseous composition, adapted to maintain in the gaseous atmosphere of said acylation enclosure a concentration of fatty acid chloride such that fatty acid chloride (29) in gaseous state is present in the gaseous atmosphere of said acylation enclosure (5) with a partial pressure substantially equal to the saturated vapor pressure of the fatty acid chloride at said grafting temperature (Tg).

7. The device according to claim 6, **characterised in that** it comprises an analysis device (37) adapted to analyse and quantify chemical species present in the flow of gaseous composition, the analysis device (37) being capable of producing quantification data representative of the concentration of fatty acid chloride and the concentration of hydrochloric acid (35) in the flow of gaseous composition.

8. The device according to claim 7, **characterised in that** it comprises computer means (50) configured to receive the quantification data and to control from this quantification data, at least one of the members of said acylation reactor (1), chosen from the group consisting of:
- means (2) for running continuously said hydroxylated material (30);
- the device (10) for applying fatty acid chloride to the surface of said hydroxylated material (30);
- means (9) for heating the gaseous atmosphere of said acylation enclosure (5) to said grafting temperature (Tg);
- means for heating the gaseous atmosphere of said recycling enclosure (12) to said recycling temperature (Tr);
- means for heating the gaseous atmosphere of said preheating enclosure (16) according to said preheating gradient;
- means (11) for establishing the flow of gaseous composition (36);
- means for controlling the temperature of the gaseous composition (36).

9. The device according to one of claims 6 to 8, **characterised in that** it comprises an enclosure, called recycling enclosure (12), arranged downstream of said acylation enclosure (5), delimiting a space (39) under a gaseous atmosphere and adapted to be able to be passed through by said running acylated material (40) between an upstream inlet (13) and a downstream outlet (14) of said recycling enclosure (12),
said acylation enclosure (5) and said recycling enclosure (12) being in gaseous composition communication such that the flow of gaseous composition passing through said acylation enclosure (5) from downstream to upstream of said acylation reactor (1) first passes through said recycling enclosure (12) then said acylation enclosure (5) and countercurrently to the running of said acylated material (40) ;
said recycling enclosure (12) comprising means (15) for heating the gaseous atmosphere of said recycling enclosure (12) to a temperature, called extraction temperature (Te), higher than said grafting temperature (Tg) and lower than the vaporization temperature of the fatty acid chloride.

10. The device according to any one of claims 6 to 9, **characterised in that** it comprises an enclosure, called preheating enclosure (16), arranged upstream of said acylation enclosure (5), adapted to be able to be passed through by said running hydroxylated material between an upstream inlet (17) and a downstream outlet (18) of said preheating enclosure (16) and delimiting an internal space (38) under a gaseous atmosphere;
said preheating enclosure (16) being equipped with means (19) for heating the gaseous atmosphere of said preheating enclosure (16) according to a gradient, called preheating gradient, increasing in temperature extending between an upstream inlet (17) of said hydroxylated material in said preheating enclosure (16) and a downstream outlet (18) of said hydroxylated material outside said preheating enclosure (16).

11. The device according to any one of claims 6 to 10, **characterised in that** it consists of a compartmentalised enclosure (21) passed through longitudinally by said continuously run hydroxylated/acylated material (30,40) between an inlet (22) and an outlet (23) of said compartmentalised enclosure (21), a first compartment of said compartmentalised enclosure (21) being formed by said preheating enclosure (16) extending in the upstream part of the compartmentalised enclosure (21), a second compartment of said compartmentalised enclosure (21) being formed by said recycling enclosure (12) extending in the downstream part of said compartmentalised enclosure (21) and a third compartment of said compartmentalised enclosure (21) being formed by said acylation enclosure (5) extending in the intermediate part of the compartmentalised enclosure (21), interposed between said preheating enclosure (16) and said recycling enclosure (12).

12. The device according to any one of claims 6 to 11, **characterised in that** it is provided with a member (24) for retaining the hydrochloric acid driven by the flow of gaseous composition (36) and for releasing a flow of gaseous composition substantially free of hydrochloric acid.

13. The device according to any one of claims 6 to 12, **characterised in that** at least one of said preheating enclosure (16), of said acylation enclosure (5), and of said recycling enclosure (12) is equipped with a plurality of rollers (25) for guiding the continuously run hydroxylated/acylated material (30,40) in the acylation reactor (1), positioned so as to guide the continuously run hydroxylated/acylated material (30,40) according to a nonlinear path.

14. The device according to any one of claims 6 to 13, **characterised in that** the applicator device (10) of the fatty acid chloride in liquid state to the surface of said hydroxylated material (30) comprises a distributor device (27) of the fatty acid chloride on the surface of said hydroxylated material (30), the distributor device (27) being a rotating distributor device having an application surface consisting of a velvet provided with filiform velvet elements, non-reactive with fatty acid chloride and being able to:
∘ be loaded with the fatty acid chloride by contact with the fatty acid chloride, and;
∘ release fatty acid chloride upon contact with said hydroxylated material, by contact of the filiform velvet elements with said hydroxylated material.
